(19) **Europäisches Patentamt European Patent Office Office européen des brevets**

(11) **EP 2 502 202 B1**

(12) **FASCICULE DE BREVET EUROPEEN**

(45) Date de publication et mention de la délivrance du brevet:
**14.08.2013 Bulletin 2013/33**

(21) Numéro de dépôt: **10777008.3**

(22) Date de dépôt: **12.11.2010**

(51) Int Cl.:
*G06T 7/20* (2006.01)

(86) Numéro de dépôt international:
**PCT/EP2010/067353**

(87) Numéro de publication internationale:
**WO 2011/061123 (26.05.2011 Gazette 2011/21)**

(54) **PROCEDE D'ESTIMATION DU MOUVEMENT D'UN INSTRUMENT D'OBSERVATION À DEFILEMENT SURVOLANT UN CORPS CELESTE**

VERFAHREN ZUR SCHÄTZUNG DER BEWEGUNG EINES ÜBER EINEN HIMMELSKÖRPER FLIEGENDEN BEOBACHTUNGSINSTRUMENTS

METHOD FOR ESTIMATING THE MOVEMENT OF A TRAVELLING OBSERVATION INSTRUMENT FLYING OVER A CELESTIAL BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2009 FR 0958195**
**10.05.2010 FR 1053632**

(43) Date de publication de la demande:
**26.09.2012 Bulletin 2012/39**

(73) Titulaire: **Astrium SAS**
**92150 Suresnes (FR)**

(72) Inventeurs:
• **PERRIER, Régis**
**F-38400 Saint Martin D'heres (FR)**
• **ORTNER, Mathias**
**F-31500 Toulouse (FR)**
• **ARNAUD, Elise**
**F-38330 Montbonnot (FR)**
• **STURM, Peter**
**F-38330 Montbonnot (FR)**

(74) Mandataire: **Ribeiro Dias, Alexandre**
**Schmit-Chrétien**
**Parc de Basso Cambo**
**4, rue Paul Mesplé**
**31100 Toulouse (FR)**

• F. Mueller et al.: "Digital photogrammetric assembly line (DPA) point determination using airborne three-line camera imagery: practical results", Proc. SPIE, vol. 2357, no. 592 5 septembre 1994 (1994-09-05), pages 592-598, XP002608261, DOI: http://dx.doi.org/ 10.1117/12.182845 Extrait de l'Internet: URL:http: //spiedl.aip.org/getabs/servlet/G etabsServlet? prog=normal&id=PSISDG00235700 0001000592000001&idtype=cvips&gifs=Yes [extrait le 2010-11-04]
• CHEN ET AL.: "DEM Generation with Prism, Alos simulation data", INTERNATIONAL CONFERENCE ON SPACE INFORMATION TECHNOLOGY, vol. 5985, 4 janvier 2006 (2006-01-04), pages 1-7, XP040215833, DOI: 10.1117/12.659399
• SZELISKI RICHARD: "Image Alignment and Stitching: A tutorial", INTERNET CITATION, 10 décembre 2006 (2006-12-10), pages I-II, XP002521144, Extrait de l'Internet: URL:http:// pages.cs.wisc.edu/~dyer/ai-qual /szeliski-tr06.pdf [extrait le 2009-03-20]
• YUJI YOKOCHI ET AL: "Extrinsic Camera Parameter Estimation Based-on Feature Tracking and GPS Data", 1 janvier 2005 (2005-01-01), COMPUTER VISION - ACCV 2006 LECTURE NOTES IN COMPUTER SCIENCE;; LNCS, SPRINGER, BERLIN, DE, PAGE(S) 369 - 378, XP019027365, ISBN: 978-3-540-31219-2 section 2.1,2.2

(56) Documents cités:
**WO-A1-2007/018097     US-A1- 2008 031 528**

- Lee et al.: "Rigorous Mathematical Modeling of Airborne Pushbroom Imaging Systems", Photogrammetric Engineering & Remote Sensing, vol. 66, no. 4 1 avril 2000 (2000-04-01), pages 385-392, XP002608262, Extrait de l'Internet: URL:https://www.asprs.org/publications/per s/2000journal/april/2000_apr_385-392.pdf [extrait le 2010-11-04]
- KLEIN G J ET AL: "4d affine registration models for respiratory-gated PET", NUCLEAR SCIENCE SYMPOSIUM CONFERENCE RECORD, 2000 IEEE LYON, FRANCE 15-20 OCT. 2000, PISCATAWAY, NJ, USA,IEEE, US LNKD- DOI:10.1109/NSSMIC. 2000.950045, vol. 2, 15 octobre 2000 (2000-10-15), pages 15_41-15_45, XP010557004, ISBN: 978-0-7803-6503-2
- MAKHOUL J: "LINEAR PREDICTION: A TUTORIAL REVIEW", PROCEEDINGS OF THE IEEE, IEEE. NEW YORK, US, vol. 63, no. 4, 1 janvier 1975 (1975-01-01), pages 561-580, XP000891549, ISSN: 0018-9219
- SHANG-HONG LAI ET AL: "Robust and Efficient Image Alignment with Spatially Varying Illumination Models", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 2, 23 juin 1999 (1999-06-23), pages 167-172, XP010347584, ISBN: 978-0-7695-0149-9
- Perrier et al.: "Estimating satellite attitude from pushbroom sensors", , 2 septembre 2010 (2010-09-02), pages 1-8, XP002608263, Extrait de l'Internet: URL:http://hal.inria.fr/inria-00514483/PDF /1130.pdf [extrait le 2010-11-04]
- Perrier et al.: "Satellite Image Registration for attitude estimation with a constrained polynomial model", , 3 septembre 2010 (2010-09-03), pages 1-4, XP002608264, Extrait de l'Internet: URL:http://hal.inria.fr/inria-00514896/PDF /3116.pdf [extrait le 2010-11-04]

**Description**

La présente invention appartient au domaine de l'exploitation d'images obtenues par au moins deux barrettes d'un instrument d'observation à défilement embarqué à bord d'un véhicule (avion, drone, hélicoptère, satellite, etc.) survolant un corps céleste, tel que la Terre.

Une barrette d'un instrument à défilement comporte une pluralité de cellules sensibles (typiquement de 100 à 100000) généralement agencées en ligne, éventuellement sur plusieurs lignes. La ligne de visée de la barrette est dirigée vers la surface terrestre, et forme avec la ligne de cellules sensibles un plan, dit « plan de visée ».

On peut définir la ligne de visée principale de l'instrument soit comme la ligne de visée du pixel central d'une des deux barrettes, soit comme la ligne de visée du pixel central d'une barrette fictive qui serait placée par exemple à égale distance des deux barrettes.

Au cours d'une prise de vue, chaque barrette acquiert successivement, par défilement de son plan de visée sur la scène observée, des images lignes représentant différentes portions linéaires de ladite scène. Chaque cellule sensible de la barrette enregistre dans un pixel l'intensité lumineuse d'une zone de la portion linéaire visée, dans la longueur d'onde considérée.

Le défilement du plan de visée de chaque barrette s'effectue par exemple par déplacement du véhicule. C'est le cas généralement pour un instrument embarqué dans un satellite placé sur une orbite basse.

En général, l'acquisition des images lignes d'une même barrette est réalisée durant une période de temps fixe (durée d'acquisition), et avec une fréquence d'acquisition sensiblement constante.

Pour une application typique dans le domaine spatial, un instrument d'observation est embarqué à bord d'un satellite en orbite à 500 à 800 kilomètres d'altitude, sa ligne de visée étant nominalement dirigée vers le centre de la Terre ; la focale de l'instrument est de 0.5 à 15 mètres, le champ de vue est de 1 à 20 degrés, chaque barrette comporte une ligne de 5000 à 50000 cellules sensibles, la vitesse de défilement est comprise entre 6.5 et 6.8 kilomètres par seconde, la fréquence d'acquisition est de 500 à 5000 Hertz ; la fauchée (longueur de la portion linéaire couverte par une image ligne à la surface terrestre) est de 10 à 100 kilomètres, la dimension d'une zone imagée par un pixel est de 0.5 à 20 mètres à la surface de la Terre. Les barrettes sont généralement séparées de 5 à 50 centimètres dans le plan focal ; l'écart temporel entre la prise d'image d'un point de la surface terrestre par la première barrette et sa prise d'image par la seconde barrette est de 0.05 à 5 secondes.

Les images lignes successives acquises par une même barrette forment une matrice de pixels dite « image composée », représentant la scène observée durant la prise de vue. On comprend que, du fait que les images lignes sont acquises à des instants différents et du fait des mouvements de l'instrument au cours de la prise de vue, l'image composée répartie dans un plan suivant une grille régulière ne représente pas de façon exacte la scène telle qu'elle devrait être vue idéalement par un observateur surplombant ladite scène. Par exemple, du fait de ces mouvements, une route parfaitement droite pourra être curviligne dans l'image composée.

Dans le cas le plus général, au cours d'une prise de vue, deux barrettes différentes fourniront deux images composées différentes dont les pixels acquis à un instant donné représentent des zones différentes de la scène observée. En général, la disposition des barrettes, par exemple parallèles dans le plan focal de l'instrument d'observation, est telle que ces images composées possèdent un recouvrement spatial important lorsque le véhicule défile au-dessus de la scène à observer.

Les différences entre les deux images composées viennent du fait que les lignes de visée associées aux deux barrettes sont différentes. De ce fait, les images composées ne se recouvrent pas tout à fait au début et à la fin de la prise de vue. Mais les différences entre les deux images composées proviennent surtout des mouvements de l'instrument eux-mêmes, car ceux-ci vont affecter à tout instant des pixels différents dans chaque image composée, du fait précisément de l'écart entre les lignes de visée des deux barrettes.

On connaît, du brevet FR 2 899 344, un procédé de restitution de la ligne de visée dans lequel on détermine, par corrélation, des zones caractéristiques homologues entre les images composées d'une même scène acquises par deux barrettes différentes, et on restitue les variations angulaires de la ligne de visée en fonction des distances géométriques entre les positions (c'est-à-dire les indices des pixels) des zones caractéristiques dans chacune desdites images composées.

Cependant, ce procédé possède de nombreuses limitations.

Par exemple, la capacité de pouvoir déterminer ou non des zones caractéristiques homologues dans les deux images composées dépend fortement de la nature de la scène observée. Par exemple, pour des scènes faiblement texturées, telles que des scènes de mer/océan et/ou montagne enneigée, il sera en pratique impossible de déterminer des zones caractéristiques homologues en nombre suffisant pour avoir de bonnes performances sur la restitution de la ligne de visée.

De plus, le procédé du brevet FR 2 899 344 est sensible à des effets de parallaxe et/ou à la présence de nuages, qui peuvent distordre ou empêcher la corrélation des zones caractéristiques homologues.

Dans le procédé du brevet FR 2 899 344, les paramètres estimés par corrélation entre zones caractéristiques homologues sont les variations angulaires relatives d'un instant d'échantillonnage à l'autre, ce qui nécessite une étape supplémentaire de filtrage et d'intégration pour restituer les variations angulaires absolues, étape qui peut s'avérer pénalisante en termes de complexité de calcul.

De plus le procédé du brevet FR 2 899 344, qui s'applique très bien à une paire d'images composées, n'est pas facilement généralisable au traitement simultané de plus de deux images composées possédant des décalages temporels différents, voire des fréquences d'acquisition différentes. D'autres procédés sont également connus, voir par exemple :

- F. Mueller et al. : « Digital photogrammetric assembly line (DPA) point determination using airborne three-line camera imagery - practical results », Proc. SPIE, vol. 2357, no. 592, pages 592-598 ;
- Chen et al. : « DEM generation with prism, Alos simulation data », International Conference on Space Information Technology, vol. 5985, pages 1-7 ;
- Szeliski Richard, « Image alignment and stitching : a tutorial », http://pages.cs.wisc.edu/~dyer/ai-qual/szeliski-tr06.pdf ;
- Yuji Okochi et al. : « Extrinsic camera parameter estimation absed on feature estimation and GPS data », Computer Vision, ACCV 2006 Lecture Notes in Computer Science, pages 369-378.

La présente invention a pour but d'apporter des solutions à toutes ces limitations, en proposant un procédé d'estimation du mouvement de l'instrument d'observation adapté à l'utilisation simultanée des images lignes acquises par toutes les barrettes de l'instrument d'observation, même lorsque lesdites barrettes sont en nombre égal ou supérieur à trois.

La présente invention a également pour but de proposer un procédé d'estimation qui soit robuste même lorsque la scène observée comporte une ou des zones faiblement texturées.

La présente invention a également pour but de proposer un procédé d'estimation adapté à tenir compte, outre des images composées fournies par les différentes barrettes, d'informations fournies notamment par les senseurs d'attitude embarqués dans le véhicule et/ou de tenir compte d'une connaissance a priori de certaines caractéristiques du mouvement de l'instrument d'observation.

La présente invention concerne un procédé d'estimation du mouvement d'un instrument d'observation embarqué dans un véhicule survolant un corps céleste, l'instrument d'observation comportant au moins deux barrettes dont les lignes de visée sont différentes, chaque barrette comportant des cellules sensibles et réalisant l'acquisition successive, par défilement de sa ligne de visée sur le corps céleste, d'images lignes formant une image composée, des parties des images composées représentant sensiblement une même scène du corps céleste. Le mouvement estimé est déterminé par optimisation d'une fonction globale cumulant :

- une fonction de ressemblance image associant, à une hypothèse de mouvement donnée, une ressemblance entre des valeurs de pixels mis en correspondance d'au moins une paire d'images composées, des pixels mis en correspondance étant des pixels représentant théoriquement le même point de la scène observée compte tenu de l'hypothèse de mouvement considérée,
- une fonction de ressemblance externe associant, à ladite hypothèse de mouvement considérée, une ressemblance entre ladite hypothèse de mouvement et des mesures, représentatives de mouvements de l'instrument d'observation, effectuées par un ou des capteurs différents des barrettes de l'instrument d'observation.

Le procédé comporte, pour chaque hypothèse de mouvement considérée au cours de l'optimisation de la fonction globale, les étapes :

- de détermination, en fonction de l'hypothèse de mouvement considérée et d'un modèle géométrique des directions de visée des cellules sensibles des barrettes de l'instrument d'observation, d'au moins une transformation de mise en correspondance des pixels de l'au moins une paire d'images composées, dite « transformation spatio-temporelle »,
- de mise en correspondance des pixels de l'au moins une paire d'images composées au moyen de l'au moins une transformation spatio-temporelle.

De préférence, la fonction globale est optimisée itérativement, par itération des étapes suivantes jusqu'à ce qu'un critère d'arrêt soit vérifié :

- détermination de l'au moins une transformation spatio-temporelle de l'au moins une paire d'images composées d'après l'hypothèse de mouvement de l'itération en cours,
- mise en correspondance des pixels de l'au moins une paire d'images composées,

- calcul, pour la fonction de ressemblance image, de données images en fonction desdits pixels mis en correspondance, lesdites données image comprenant au moins un gradient de la fonction de ressemblance image, représentatif de la variation, au voisinage de l'hypothèse de mouvement de l'itération en cours, de la ressemblance entre les valeurs des pixels mis en correspondance de l'au moins une paire d'images composées,
- mise à jour de l'hypothèse de mouvement pour l'itération suivante en fonction des données images.

De préférence, la fonction globale est optimisée itérativement, par itération des étapes suivantes jusqu'à ce qu'un critère d'arrêt soit vérifié :

- calcul, pour la fonction de ressemblance externe, de données externes en fonction des mesures du ou des capteurs et de l'hypothèse de mouvement de l'itération en cours, lesdites données externes comprenant au moins un gradient de la fonction de ressemblance externe, représentatif de la variation, au voisinage de cette hypothèse de mouvement, de la ressemblance entre l'hypothèse de mouvement de l'itération en cours et les mesures du ou des capteurs,
- mise à jour de l'hypothèse de mouvement pour l'itération suivante en fonction des données externes.

De préférence, au moins un capteur est un gyroscope ou un capteur stellaire ou un capteur angulaire d'un miroir orientable de l'instrument d'observation.

De préférence, on détermine le mouvement estimé en fonction d'un modèle temporel prédéfini du mouvement de l'instrument d'observation.

De préférence, le mouvement estimé est déterminé par optimisation d'une fonction de ressemblance modèle associant, à une hypothèse de mouvement donnée, une ressemblance entre ladite hypothèse de mouvement et le modèle temporel de mouvement.

De préférence, le procédé comporte une étape de mise à jour du modèle temporel de mouvement en fonction d'une hypothèse de mouvement.

De préférence, la fonction de ressemblance modèle est optimisée itérativement, par itération des étapes suivantes jusqu'à ce qu'un critère d'arrêt soit vérifié :

- calcul, pour la fonction de ressemblance modèle, de données modèle en fonction du modèle temporel de mouvement et de l'hypothèse de mouvement de l'itération en cours, lesdites données modèle comprenant au moins un gradient de la fonction de ressemblance modèle, représentatif de la variation, au voisinage de cette hypothèse de mouvement, de la ressemblance entre l'hypothèse de mouvement de l'itération en cours et le modèle temporel de mouvement,
- mise à jour de l'hypothèse de mouvement pour l'itération suivante en fonction des données modèle.

De préférence, la fonction de ressemblance image, la fonction de ressemblance externe et la fonction de ressemblance modèle sont optimisées conjointement, par optimisation d'une fonction globale cumulant ladite fonction de ressemblance image, ladite fonction de ressemblance externe et ladite fonction de ressemblance modèle.

De préférence, le modèle temporel de mouvement est un modèle de mouvement paramétrique, de préférence un modèle dont les fonctions de base sont du type polynômes, ou ondelettes, ou sinusoïdes, ou splines.

De préférence, le modèle temporel de mouvement est un modèle de mouvement probabiliste, de préférence un modèle de type autorégressif.

L'invention sera mieux comprise à la lecture de la description suivante, donnée à titre d'exemple nullement limitatif, et faite en se référant aux figures qui représentent :

- Figure 1 : une représentation très schématique d'un instrument d'observation à défilement survolant la Terre,
- Figure 2, 3, 4 et 5: des diagrammes illustrant des modes particuliers de mise en oeuvre d'un procédé selon l'invention.

La présente invention concerne un procédé d'estimation du mouvement d'un instrument d'observation 10, embarqué dans un véhicule (avion, drone, hélicoptère, satellite, etc.) survolant un corps céleste, au cours de la prise de vue. Dans la suite de la description, on se place de manière non limitative dans le cas où le corps céleste survolé et observé est la Terre.

La mise en oeuvre de ce procédé d'estimation du mouvement de l'instrument d'observation 10 est par exemple assurée par un dispositif de calcul (microcontrôleur, ordinateur muni d'au moins un microprocesseur, etc.). Le dispositif de calcul comporte des moyens de mémorisation (disque dur magnétique, mémoire flash, disque optique, etc.) dans lesquels est mémorisé un produit programme d'ordinateur, sous la forme d'un ensemble d'instructions de code de programme à exécuter pour mettre en oeuvre les étapes du procédé selon l'invention, à partir des images lignes acquises par l'instrument d'observation 10.

Suivant certains modes de réalisation, le dispositif de calcul comporte également un ou des circuits intégrés, de type ASIC, FPGA, etc., adaptés à mettre en oeuvre tout ou partie des étapes du procédé selon l'invention.

Le dispositif de calcul peut être embarqué avec l'instrument d'observation 10 dans le véhicule survolant la Terre dans le cas d'un traitement en temps réel. Dans le cas d'un traitement en temps différé, le dispositif de calcul est indifféremment embarqué avec l'instrument d'observation 10 dans le véhicule, ou déporté, c'est-à-dire localisé dans une station au sol ou dans un second véhicule survolant la Terre.

A) Définitions et notations

Des définitions et notations utilisées dans la suite de la description sont données ci-après. On comprend que le choix d'une convention particulière n'est pas limitatif de l'invention qui pourrait être décrite de manière équivalente en adoptant d'autres conventions sans que l'invention en soit modifiée.

A.1) Instrument d'observation, images lignes, images composées

On considère un instrument d'observation 10 comportant Nb barrettes $b_i$, $1 \leq i \leq Nb$. On suppose pour simplifier que chaque barrette comporte le même nombre K de cellules sensibles. On se place dans le cas non limitatif où les barrettes $b_i$ sont agencées de façon sensiblement parallèle dans le plan focal de l'instrument d'observation 10.

Le défilement de la ligne de visée de chaque barrette $b_i$ permet d'acquérir successivement des images lignes correspondant à des portions linéaires différentes d'une scène S observée, c'est-à-dire des portions disjointes ou qui se recouvrent au plus partiellement.

Dans la suite de la description, on se place dans le cas où le défilement de la ligne de visée d'une barrette s'effectue par déplacement du véhicule par rapport à la Terre (un tel instrument est connu sous le nom de « push broom » dans la littérature anglo-saxonne).

Cet exemple n'est cependant pas limitatif de l'invention. Par exemple, le défilement de la ligne de visée d'une barrette peut être effectué par déplacement de ladite ligne de visée par rapport au véhicule, au moyen d'un mécanisme de balayage portant soit la barrette, soit un miroir de visée se trouvant sur le chemin optique de la barrette. Cela peut être le cas pour un satellite d'observation en orbite géostationnaire, stabilisé selon trois axes.

A des fins de simplification des équations, et de manière nullement limitative de l'invention, on considère que la période d'acquisition d'images lignes, désignée par $\Delta T$, est constante au cours du temps, et la même pour toutes les barrettes $b_i$.

On notera toutefois que dans le cas d'application le plus courant, notamment pour un système d'observation par satellite, on utilise une barrette fonctionnant dans une bande panchromatique ainsi que d'autres barrettes fonctionnant dans des bandes spectrales dédiées (par exemple vert, rouge, proche infrarouge), la fréquence d'acquisition de la barrette panchromatique étant généralement quatre fois plus élevée que celle des autres barrettes.

Au cours de la prise de vue, N images lignes sont acquises par chacune des barrettes $b_i$ aux instants $(n-1)\cdot\Delta T$, $1 \leq n \leq N$. Chaque barrette $b_i$ acquiert ainsi une image composée $B_i$ constituée par l'ensemble $\{B_i(k,n), 1 \leq k \, s \, K, 1 \leq n \leq N\}$, où $B_i(k,n)$ est la valeur du pixel d'indice $(k,n)$.

L'indice k correspond à une dimension spatiale : la position de la cellule sensible le long de la barrette ; l'indice n représente une dimension temporelle : l'instant de la prise de vue. D'où l'appellation « grille spatio-temporelle » que l'on associera à l'image composée.

Pour simplifier les notations, on indexera les instants d'acquisition de sorte que l'instant d'acquisition d'indice n est l'instant $(n-1)\cdot\Delta T$.

Au cours d'une prise de vue, deux barrettes différentes fourniront deux images composées différentes dont les pixels acquis à un même instant donné représentent des zones différentes de la scène observée. La disposition des barrettes dans le plan focal de l'instrument d'observation est telle que ces images composées possèdent un recouvrement spatial important lorsque le véhicule défile au-dessus de la scène à observer. Le procédé ne traitera que la partie des images composées qui correspond à ce recouvrement spatial.

A.2) Repère instrument

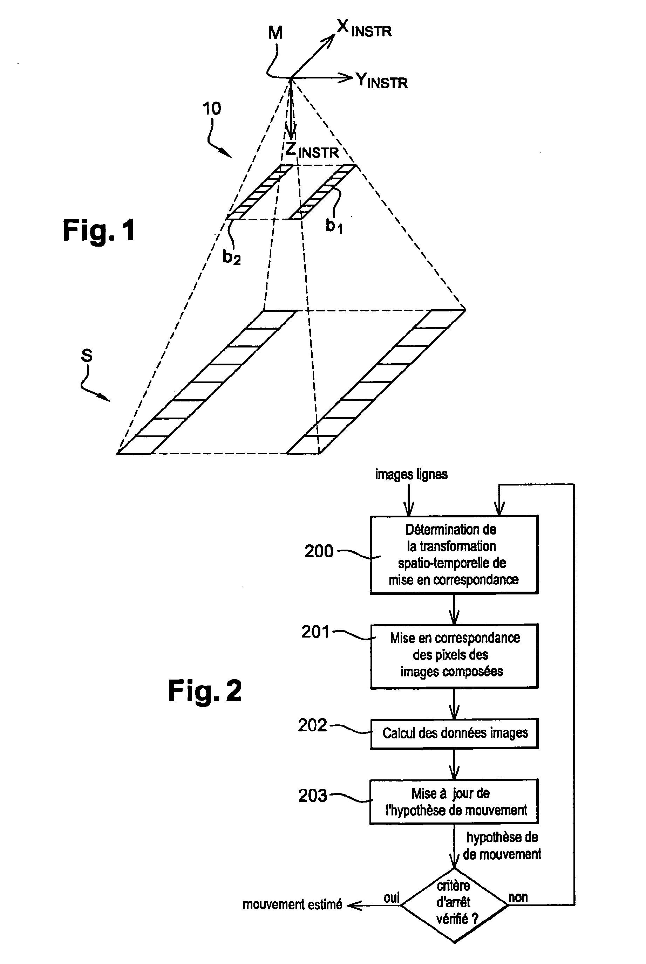

La figure 1 représente très schématiquement en perspective le survol d'une scène par un instrument d'observation 10 comportant au moins deux barrettes $b_1$, $b_2$ considérées parallèles dans le plan focal de l'instrument.

On associe à l'instrument d'observation 10 un repère instrument $R_{INSTR}$ dont l'origine M représente la position de l'instrument d'observation 10 dans le véhicule. Le repère instrument $R_{INSTR}$ comporte trois axes $X_{INSTR}$, $Y_{INSTR}$ et $Z_{INSTR}$, orthogonaux entre eux. L'axe $X_{INSTR}$ est parallèle aux barrettes $b_1$ et $b_2$, l'axe $Z_{INSTR}$, correspondant à la direction de visée de l'instrument 10, est orienté vers la Terre, et l'axe $Y_{INSTR}$ est orthogonal aux axes $X_{INSTR}$ et $Z_{INSTR}$, et sensiblement dans la direction de déplacement de l'instrument d'observation 10, par déplacement du véhicule.

A.3) Mouvement de l'instrument d'observation

Dans le cas d'un défilement du plan de visée d'une barrette obtenu par le déplacement du véhicule, les mouvements de translation de l'instrument d'observation 10 proviennent du survol du véhicule au dessus de la scène.

Ces mouvements de translation s'effectuent en général à des fréquences relativement basses et sont peu observables par le procédé, en particulier lorsque l'altitude du véhicule est haute. En outre, ils sont difficiles à distinguer des mouvements de rotation de l'instrument d'observation 10.

C'est pourquoi on supposera pour simplifier que les mouvements de translation de l'instrument sont connus avec une précision suffisante, et que l'on cherche à restituer avant tout les mouvements de rotation de l'instrument d'observation 10. Il est cependant à noter, comme on le verra par la suite, que le procédé peut être facilement généralisé à l'estimation du mouvement complet de l'instrument, aussi bien en translation qu'en rotation, et peut s'étendre à l'estimation des mouvements de toute partie mobile de l'instrument, comme un miroir de visée.

Les mouvements de rotation de l'instrument d'observation 10 (supposé fixe par rapport au véhicule) proviennent notamment des mouvements de rotation du véhicule porteur, dits « mouvements d'ensemble » de l'instrument d'observation 10. Ces mouvements sont en général estimés grâce à des capteurs dédiés embarqués à bord du véhicule, comme par exemple des gyroscopes, et des senseurs stellaires si le véhicule est un satellite. Cependant, cette estimation est entachée d'erreurs dues en particulier aux erreurs de mesures.

D'autres mouvements de l'instrument, et plus particulièrement de sa ligne de visée, dits « mouvements parasites », proviennent de déplacements relatifs en translation et/ou en rotation entre différents éléments optiques de l'instrument (plan focal, miroirs, etc.), dus par exemple à des vibrations, ces déplacements affectant la ligne de visée de l'instrument. Les mouvements parasites sont beaucoup moins facilement mesurables, car il faudrait pour cela un grand nombre d'accéléromètres et de gyromètres répartis sur toute la structure de l'instrument d'observation.

Les mouvements d'ensemble et les mouvements parasites se distinguent en général par leur amplitude et leur spectre fréquentiel. Les mouvements d'ensemble sont de l'ordre du centième de degré à quelques degrés, et sont relativement basses fréquences (de zéro à quelques Hertz). Les mouvements parasites sont un ordre de grandeur plus petits que les mouvements d'ensemble, et sont plus hautes fréquences (de quelques dizaines à quelques centaines de Hertz).

Les mouvements d'ensemble de l'instrument d'observation 10 se traduisent par des rotations du repère instrument $R_{INSTR}$ par rapport à un repère de référence terrestre $R_T$ (par exemple le repère géographique local au point de référence de la scène observée, non représenté sur les figures) qui traduisent l'évolution temporelle de l'attitude de l'instrument par rapport audit repère de référence $R_T$.

Les mouvements parasites se traduisent par des petites rotations exprimées par rapport au repère instrument $R_{INSTR}$, celles-ci se décomposant en rotations autour de l'axe $Y_{INSTR}$, dites « rotations en roulis », autour de l'axe $X_{INSTR}$, dites « rotations en tangage », et autour de l'axe $Z_{INSTR}$, dites « rotations en lacet ».

Il est à noter que des erreurs d'estimation du mouvement d'ensemble de l'instrument d'observation 10 peuvent se formuler aux petits angles de la même façon que les mouvements parasites, en termes d'erreurs de roulis, tangage, lacet. Le mouvement de l'instrument d'observation 10 peut donc être décrit comme les valeurs prises au cours du temps d'angles d'attitude (angles d'Euler par exemple) par rapport à un repère de référence. D'autres formulations équivalentes à base d'autres angles, de quaternions ou de matrices de rotation peuvent être utilisées sans que l'invention en soit modifiée dans son principe.

On désigne par $\theta_R(n)$, $1 \leq n \leq N$, le mouvement réel de l'instrument d'observation 10 à l'instant d'acquisition d'indice n, par exemple exprimé dans le repère de référence terrestre $R_T$. Comme nous l'avons vu, ce mouvement est la somme des mouvements d'ensemble et des mouvements parasites. Il est à noter que, dans les cas où le balayage de la ligne de visée s'effectue par rotation d'un miroir de visée présent sur le chemin optique de l'instrument, le ou les angles de rotation du miroir sont inclus dans le vecteur $\theta_R(n)$ à tout instant n, $1 \leq n \leq N$.

On désigne par $\ominus_R$ l'ensemble de tous les $\theta_R(n)$, $1 \leq n \leq N$, représentant le mouvement réel de l'instrument au cours de la prise de vue.

On désigne par $\theta_{EST}(n)$, $1 \leq n \leq N$, le mouvement estimé de l'instrument d'observation 10 à l'instant d'acquisition d'indice n exprimé dans le repère de référence $R_T$. On désigne par $\ominus_{EST}$ l'ensemble de tous les $\theta_{EST}(n)$, $1 \leq n \leq N$, représentant le mouvement estimé de l'instrument d'observation 10 au cours de la prise de vue.

On désigne par $\ominus = \{\theta(n), 1 \leq n \leq N\}$ une hypothèse de mouvement de l'instrument 10 au cours de la prise de vue aux instants d'acquisition d'indice n, exprimée dans le repère de référence $R_T$.

A.4) Modèle géométrique, transformation spatio-temporelle, et mise en correspondance des pixels des images composées

On suppose connu un modèle géométrique $R_i^{mod}(k)$ de l'instrument qui associe à la cellule sensible d'indice k de la barrette $b_i$, sa direction de visée exprimée dans le repère instrument $R_{INSTR}$. Ce modèle géométrique peut également modéliser les distorsions optiques introduites par l'instrument d'observation 10, qui sont par exemple préalablement estimées par calibration.

On considère un repère cartographique $R_C = (O,X_C,Y_C,Z_C)$ (non représenté sur les figures), par exemple tel que $(X_C,Y_C)$ est le plan tangent à la surface terrestre en un point de référence O de la scène observée, dans lequel pourront se projeter les images composées acquises par les barrettes en vue de la reconstitution de l'image réelle de la scène survolée. Le plan $(O,X_C,Y_C)$ sera désigné par « référentiel image » dans la suite de la description. Pour simplifier les équations, on se place dans le cas non limitatif où les repères $R_T$ et $R_C$ sont confondus.

On note cependant que l'on pourrait considérer d'autres référentiels image, éventuellement non planaires, comme par exemple une projection sur l'ellipsoïde terrestre, sur un modèle connu de relief, ou encore l'une des images composées acquises par l'une des barrettes qui sont déformées par le mouvement de l'instrument d'observation 10.

A partir d'une hypothèse de mouvement donnée $\ominus$ de l'instrument, chaque pixel d'indice $q = (k,n)$ de l'image composée, acquis par la cellule sensible d'indice k de la barrette $b_i$ à l'instant n, peut être projeté dans le référentiel image en calculant l'intersection de la droite de visée du pixel d'indice $q = (k,n)$ avec le plan $(O,X_C,Y_C)$.

Pour cela, on calcule la direction de visée $d_i(k,n)$, d'une droite passant par la position M de l'instrument 10 et par la cellule sensible d'indice k à l'instant n, dans le repère cartographique $R_C$ à partir de l'hypothèse de mouvement $\theta(n)$ de l'instrument 10 à l'instant n et du modèle géométrique de l'instrument :

$$d_i(k,n) = R_{\theta(n)} \cdot R_i^{mod}(k)$$

où $R_{\theta(n)}$ est une rotation qui transforme le repère instrument $R_{INSTR}$ dans le repère cartographique $R_C$. Le projeté $p = (x,y)$ du pixel d'indice $q = (k,n)$ dans le référentiel image $(O,Xc,Yc)$ correspond à l'intersection de la droite de direction $d_i(k,n)$ avec le plan $(O,Xc,Yc)$. On obtient ainsi une transformation $V_i$ qui, en fonction d'une hypothèse de mouvement $\ominus$, associe à un pixel d'indice $q = (k,n)$ de l'image composée, le point $p = (x,y)$ du référentiel image, qui est le point effectivement représenté par le pixel $B_i(k,n)$ :

$$p = V_i(q,\Theta) \qquad\qquad (1)$$

Dans cette relation (1), les variables sont p et q, l'hypothèse de mouvement $\ominus$ étant considérée comme un ensemble de paramètres dont dépend la transformation $V_i$, $1 \leq i \leq Nb$.

Le calcul de la projection peut être fait de manière analytique si le modèle géométrique de l'instrument d'observation 10 n'est pas trop compliqué. On peut également faire des tirages de rayons dans le cas d'un modèle géométrique d'instrument plus complexe. Un modèle de relief de la scène peut également être utilisé pour prendre en compte les décalages qu'il introduit.

On désigne par $p_i^{k,n}=(x_i^{k,n}, y_i^{k,n})$ la position du pixel d'indice (k,n) ainsi projeté dans le référentiel image $(O,X_C, Y_C)$, exprimée en mètres ou toute autre unité. On désigne par « grille spatio-temporelle » de l'image composée, l'ensemble des points $p_i^{k,n}$ projetés des pixels de l'image composée dans le référentiel image. On désigne par « image rectifiée par le mouvement » l'image composée qui associe à la position $p_i^{k,n}$, la valeur du pixel $B_i(k,n)$.

Pour les besoins du procédé, il est nécessaire de calculer les transformations géométriques $W_i$, inverses de $V_i$, dites « transformations spatio-temporelles ».

Etant donnée une hypothèse de mouvement $\ominus$ donnée, les transformations spatio-temporelles associent, à un point $p = (x,y)$ du référentiel image dans la scène imagée par une barrette $b_i$ au cours de la prise de vue, la position q du pixel dans l'image composée $B_i$ acquise par la barrette $b_i$ dont le projeté dans le référentiel image est le point $p = (x,y)$ compte tenu de l'hypothèse de mouvement $\ominus$.

Pour cela, il faut considérer que l'hypothèse de mouvement $\ominus = \{\theta(n), 1 \leq n \leq N\}$ est interpolée à des valeurs non entières du temps : $\ominus = \{\theta(t), t$ réel dans l'intervalle $[0,(n-1)\cdot\Delta T]\}$, et que l'image composée $B_i$ rectifiée par le mouvement est également interpolée suivant tout procédé d'interpolation connu de l'homme de l'art, tel qu'une interpolation cubique, de Shannon tronquée, ou utilisant des splines, de sorte qu'on peut définir la valeur de pixels $B_i(\alpha,t)$ pour des positions continues $\alpha$ d'une cellule sensible virtuelle le long de la barrette $b_i$, et pour un instant d'acquisition t continu. Considérant le point $p = (x,y)$ du référentiel image, on peut positionner ce point par rapport à la grille spatio-temporelle de l'image $B_i$ rectifiée par le mouvement, ce qui donne une première approximation entière (k',n') de la position du pixel dans l'image composée. On obtient des valeurs réelles $(\alpha,t)$ raffinant cette approximation par exemple en travaillant sur de petites variations et en linéarisant le problème. De façon plus générale, toute méthode connue de l'homme de l'art peut être utilisée pour inverser la transformation $V_i$.

On appellera $W_i$ la transformation inverse de $V_i$ qui à tout point $p = (x,y)$ du référentiel image associe la position

q = ($\alpha$,t) du pixel qui image ce point dans l'image composée $B_i$ compte tenu de l'hypothèse de mouvement $\ominus$ :

$$q = W_i(p, \Theta) \qquad\qquad (2)$$

les variables p et q pouvant être égales à un nombre non entier par interpolation.

Les transformations spatio-temporelles $W_i$, $1 \le i \le Nb$, permettent de mettre en correspondance les pixels des images composées d'après une hypothèse de mouvement $\ominus$, c'est-à-dire de déterminer, pour tout point p considéré du référentiel image, les valeurs des pixels $B_i(W_i(p,\ominus))$, $1 \le i \le Nb$, qui représentent théoriquement ce point p dans les images composées.

Par « représentent théoriquement ce point », on entend que les pixels mis en correspondance ne représentent effectivement le même point que lorsque l'hypothèse de mouvement $\ominus$ considérée est égale au mouvement réel $\ominus_R$. Lorsque l'hypothèse de mouvement $\ominus$ considérée sera très différente du mouvement réel $\ominus_R$, on comprend donc que les pixels mis en correspondance, bien que représentant théoriquement le même point, représenteront en pratique des points différents de la scène observée, et que les valeurs de ces pixels seront peu corrélées.

Dans le cas où l'hypothèse de mouvement correspond à la réalité ($\ominus = \ominus_R$), on devrait avoir, aux erreurs d'interpolation près, pour tout point p dans le référentiel image et quels que soient i et j, $1 \le i,j \le Nb$ :

$$B_i(W_i(p, \Theta_R)) = B_j(W_j(p, \Theta_R)) \qquad\qquad (3)$$

car ces deux pixels mis en correspondance des images composées interpolées correspondent au même point p du référentiel image.

On comprend donc que l'on peut évaluer la cohérence d'une hypothèse de mouvement $\ominus$ donnée par comparaison des pixels mis en correspondance $B_i(W_i(p,\ominus))$, $1 \le i \le Nb$.

Notons que la mise en correspondance des images composées peut s'effectuer à partir de la transformation spatio-temporelle :

$$W_{ji} = W_j \circ W_i^{-1} = W_j \circ V_i \qquad\qquad (4)$$

qui fait passer directement d'une image composée $B_i$ à une autre image composée $B_j$. Pour calculer $W_{ji}$, on considère une paire de barrettes $b_i$, $b_j$, et une hypothèse de mouvement $\ominus$. On considère un pixel q = (k,n) de l'image composée acquise par la barrette $b_i$. On projette ce pixel dans le référentiel image suivant l'hypothèse de mouvement $\ominus$, ce qui donne le point $p_i = V_i(q,\ominus)$, puis on calcule la position $q_j=(\alpha,t)$ de l'image composée $B_j$ qui se projette en $p_i$ :

$$q_j = W_j(V_i(q, \Theta)) = W_{ji}(q, \Theta) \qquad\qquad (5)$$

Dans tous les cas, on parlera d'une transformation spatio-temporelle mettant en correspondance les pixels des images composées $B_i$, $B_j$ obtenues par les barrettes $b_i$, $b_j$. Notons que cette transformation spatio-temporelle dépend également du référentiel image choisi, du modèle géométrique de l'instrument, et éventuellement d'un modèle de terrain que l'on introduit pour effectuer la mise en correspondance.

B) Description du procédé d'estimation

B.1) Principe général du procédé d'estimation

Selon l'invention, le mouvement estimé est déterminé par optimisation d'une fonction, dite « fonction $F_1$ de ressemblance image » associant, à une hypothèse de mouvement $\ominus$ donnée, une ressemblance entre les valeurs de pixels mis en correspondance d'au moins une paire d'images composées. Tel qu'on l'a vu précédemment, des pixels mis en correspondance sont des pixels représentant théoriquement le même point de la scène observée compte tenu de l'hypothèse de mouvement considérée.

Pour chaque hypothèse de mouvement $\ominus$ considérée au cours de l'optimisation de la fonction $F_1$ de ressem-

blance image, le procédé comporte les étapes :

- 200 de détermination, pour l'au moins une paire d'images composées, d'au moins une transformation spatio-temporelle en fonction de l'hypothèse de mouvement $\ominus$ considérée et d'un modèle géométrique de l'instrument d'observation 10,
- 201 de mise en correspondance des pixels de l'au moins une paire d'images composées au moyen de l'au moins une transformation spatio-temporelle.

Les opérations effectuées au cours des étapes 200 et 201 ont déjà été décrites au cours de la section A.4) précédente.

La fonction $F_1$ de ressemblance image comprend par exemple une composante $F_{12}$ prenant en compte les images composées $B_1$, $B_2$ acquises par les barrettes $b_1$, $b_2$. Les pixels de ces images composées sont mis en correspondance au moyen des transformations spatio-temporelles $W_1$ et $W_2$, ou de l'unique transformation spatio-temporelle $W_{21}$ (ou $W_{12}$).

De préférence, on choisit comme composante $F_{12}$ une fonction avantageusement convexe qui augmente lorsqu'une distance entre les matrices des valeurs des pixels mis en correspondance des deux images composées $B_1$ et $B_2$ diminue. Dans ce cas l'optimisation consiste à déterminer une hypothèse de mouvement qui tend à maximiser cette composante $F_{12}$.

Néanmoins, on pourrait de manière équivalente choisir une fonction concave qui diminue lorsqu'une distance entre les matrices des valeurs des pixels mis en correspondance des deux images composées $B_1$ et $B_2$ diminue. Dans ce cas l'optimisation consiste à déterminer l'hypothèse de mouvement qui tend à minimiser cette composante $F_{12}$.

La distance peut être quadratique, linéaire, sous forme de produit scalaire, avec ou sans pondération dépendant du pixel, etc. On note qu'il s'agit ici d'une distance entre les valeurs de pixels représentant théoriquement le même point, et non, tel que décrit dans le brevet FR 2 899 344, d'une distance géométrique entre les positions (indices) des pixels représentant effectivement le même point (zone caractéristique homologue) dans chacune des images composées.

Par exemple, on peut prendre pour fonction de ressemblance image l'une des fonctions suivantes:

$$F_{12}(\Theta) = \exp\left(-\sum_{p=(i,j)} \alpha_{ij} \cdot h_1\big(B_1(W_1(p,\Theta)) - B_2(W_2(p,\Theta))\big)\right) \qquad (6a)$$

$$F_{12}(\Theta) = \sum_{p=(i,j)} \alpha_{ij} \cdot h_1\big(B_1(W_1(p,\Theta)) - B_2(W_2(p,\Theta))\big) \qquad (6b)$$

où p = (i,j) correspond à un quadrillage de tout ou partie de la zone du référentiel image qui est imagée par les deux barrettes $b_1$ et $b_2$, $\alpha_{ij}$ sont des pondérations positives ou nulles, $h_1$ est une p-norme.

Les exemples donnés aux expressions (6a) et (6b) ne sont pas limitatifs. On note que l'optimisation de la composante $F_{12}$ de l'expression (6a) est une maximisation, tandis que l'optimisation de la composante $F_{12}$ de l'expression (6b) est une minimisation.

Il est à noter que le quadrillage p = (i,j) peut être régulier, ou plus dense dans des zones pré-spécifiées de l'image composée dont les propriétés sont jugées plus favorables que d'autres pour des opérations de mise en correspondance et évaluation de ressemblance.

Un autre exemple de fonction de ressemblance image peut être sous forme de produit scalaire :

$$F_{12}(\Theta) = \sum_{p=(i,j)} \alpha_{ij} \cdot h_1\big(B_1(W_1(p,\Theta)) \cdot B_2(W_2(p,\Theta))\big) \qquad (7)$$

Tel qu'indiqué précédemment, la mise en correspondance pourrait se traiter directement d'image composée à image composée sans passer par la grille du référentiel image. Dans ce cas, la composante $F_{12}$ de l'expression (6a) pourrait être réécrite comme suit :

$$F_{12}(\Theta) = \exp\left(- \sum_{p=(k,n)} \alpha_{kn} \cdot h_1(B_1(p) - B_2(W_{21}(p, \Theta)))\right) \qquad (8)$$

où cette fois-ci, $p = (k,n)$ correspond à tout ou partie des indices des pixels de l'image composée $B_1$ dans la zone de recouvrement des images composées $B_1$ et $B_2$.

Les pondérations $\alpha_{ij}$ peuvent être réglées individuellement avant l'optimisation de la fonction de ressemblance image. En outre, ces pondérations peuvent être choisies toutes égales, par exemple égales à un.

Il est à noter que la composante $F_{12}$ peut se présenter sous d'autres formes. En particulier, des opérateurs peuvent être introduits sur les images composées pour tenir compte du fait qu'elles ont été acquises dans des domaines de longueurs d'ondes différents. De tels opérateurs sont considérés connus de l'homme de l'art, et ne sont pas considérés ici à des fins de simplification des expressions et à titre nullement limitatif de l'invention.

Une composante $F_{12}$ selon l'un quelconque des exemples ci-dessus est particulièrement avantageuse car elle ne nécessite pas une connaissance a priori de la scène observée. En considérant ce type de ressemblance image entre images composées, on exploite une connaissance a priori du système d'acquisition qui est celle que les images composées $B_i$, $1 \leq i \leq Nb$, représentent sensiblement la même scène observée et sont théoriquement superposables (une fois mises en correspondance) en l'absence de mouvements parasites de l'instrument d'observation 10 (mises à part les différences liées aux domaines de longueurs d'ondes d'acquisition dans le cas d'un instrument d'observation 10 multi-spectral, les erreurs d'interpolation, les bruits de mesure, les défauts de calibration, etc.). En outre, ce type de composante est insensible aux textures ambiguës telles les textures périodiques ou les textures à forte direction principale (des lignes par exemple).

De manière plus générale, dans le cas où on prend en compte $Nb$ barrettes, $Nb$ étant égal ou supérieur à trois, la fonction $F_1$ de ressemblance image peut facilement prendre en compte tout ou partie des paires d'images composées disponibles, en cumulant les composantes $F_{ij}$ des différentes paires d'images composées considérées. Les composantes $F_{ij}$ sont avantageusement cumulées par produit dans le cas de composantes du type donné à l'expression (6a) :

$$F_1(\Theta) = \prod_{i<j} \beta_{ij} \cdot F_{ij}(\Theta) \qquad (9a)$$

ou par somme dans le cas de composantes du type donné à l'expression (6b) :

$$F_1(\Theta) = \sum_{i<j} \beta_{ij} \cdot F_{ij}(\Theta) \qquad (9b)$$

Dans ce processus, des pondérations positives $\beta_{ij}$ peuvent être introduites pour diminuer le poids de paires d'images composées prises dans des longueurs d'ondes différentes et telles que la ressemblance entre les valeurs des pixels mis en correspondance de ces images composées est moins fiable.

La prise en compte simultanée des images lignes acquises par toutes les barrettes considérées permettra en général d'améliorer la robustesse du procédé par rapport à l'état de l'art, en présence de zones faiblement texturées, en particulier si les images lignes sont acquises dans des domaines de longueurs d'ondes différents.

La figure 2 représente schématiquement un mode préféré de mise en oeuvre du procédé d'estimation, dans lequel l'optimisation de la fonction $F_1$ de ressemblance image est itérative, par itération des étapes suivantes jusqu'à ce qu'un critère d'arrêt soit vérifié :

- 200 détermination des transformations spatio-temporelles $W_i$ ou $W_{ij}$, pour chacune des paires d'images composées considérées, d'après l'hypothèse de mouvement $\Theta^k$ de l'itération $k$ en cours,
- 201 mise en correspondance des pixels des paires d'images composées considérées au moyen des transformations spatio-temporelles déterminées à l'étape 200,
- 202 calcul, pour la fonction $F_1$ de ressemblance image, de données images utiles pour effectuer l'optimisation,
- 203 mise à jour de l'hypothèse de mouvement pour l'itération suivante, en fonction des données images.

L'hypothèse de mouvement $\Theta^1$ considérée à la première itération correspond par exemple au mouvement idéal de l'instrument d'observation 10 tel qu'il devrait être si les ordres envoyés au système de contrôle d'attitude du véhicule étaient parfaitement respectés, et en l'absence de mouvements parasites au cours de l'acquisition. Suivant un autre exemple non limitatif, l'hypothèse de mouvement $\ominus^1$ est une première estimation du mouvement de l'instrument d'observation 10, par exemple déterminée en fonction de capteurs dédiés (senseurs d'attitude) différents de l'instrument d'observation 10.

Les opérations effectuées au cours des étapes 200 et 201 ont déjà été décrites au cours de la section A.4) précédente.

Au cours de l'étape 202 de calcul des données images, on détermine par exemple la valeur de la fonction $F_1$ de ressemblance image d'après l'hypothèse de mouvement $\ominus^k$ de l'itération k en cours.

De préférence, on détermine, au cours de l'étape 202 de calcul des données images, un ou plusieurs gradients de la fonction $F_1$ de ressemblance image. Un tel gradient est par exemple déterminé en calculant la valeur de la fonction $F_1$ pour les hypothèses de mouvement $\ominus^k$ et $\ominus^k + \delta\ominus^k$, où $\delta\ominus^k$ est une variation de l'hypothèse de mouvement de faible norme. Ces gradients donnent une information sur la direction dans laquelle faire évoluer l'hypothèse de mouvement $\ominus^k$ pour optimiser la fonction $F_1$ de ressemblance image.

Au cours de l'étape 203 de mise à jour, l'hypothèse de mouvement $\ominus^{k+1}$ est par exemple déterminée en fonction de l'hypothèse de mouvement $\ominus^k$, à laquelle on ajoute un terme de mise à jour $\Delta\ominus^k$ qui est déterminé d'après les données images. $\Delta\ominus^k$ est par exemple un gradient calculé au cours de l'étape 202, permettant d'optimiser la fonction $F_1$ de ressemblance image.

Si le critère d'arrêt est vérifié, le mouvement estimé $\ominus_{EST}$ correspond soit à l'hypothèse de mouvement $\ominus^k$ soit à l'hypothèse de mouvement $\ominus^{k+1}$.

Par exemple le critère d'arrêt est vérifié lorsque la norme du terme de mise à jour $\Delta\ominus^k$ est inférieure à un seuil prédéfini. On comprend que cet exemple n'est pas limitatif de l'invention, et que tout autre critère adapté, connu de l'homme de l'art, peut être mis en oeuvre dans le procédé d'estimation.

B.2) Description de modes particuliers de mise en oeuvre du procédé

Prise en compte de mesures externes

Dans un mode particulier de mise en oeuvre du procédé d'estimation, compatible avec l'un quelconque des modes précédemment décrits, le mouvement estimé est également déterminé par optimisation d'une fonction $F_2$, dite « de ressemblance externe ».

La fonction $F_2$ de ressemblance externe associe, à une hypothèse de mouvement $\ominus$ donnée, une ressemblance entre ladite hypothèse de mouvement et des mesures représentatives des mouvements de l'instrument d'observation 10, lesdites mesures étant effectuées par un ou des capteurs différents des barrettes dudit instrument d'observation. Ces capteurs sont désignés par « capteurs externes » dans la suite de la description.

Du fait de la détermination du mouvement estimé en prenant en compte des mesures faites par l'instrument d'observation 10 (dans la fonction $F_1$ de ressemblance image) et des mesures faites par un ou des capteurs externes (fonction $F_2$ de ressemblance externe), le procédé d'estimation devient plus robuste à la nature de la scène observée, dans la mesure où une la présence d'une zone faiblement texturée (mer/océan, nuage, montagne enneigée, etc.) ne serait défavorable, en termes de robustesse, qu'à l'optimisation par rapport à la fonction $F_1$ de ressemblance image.

De préférence, au moins un capteur externe est un gyroscope ou un capteur stellaire (parfois appelé « star tracker » dans la littérature anglo-saxonne), embarqué dans le même véhicule que l'instrument d'observation 10.

En complément ou en alternative, lorsque le défilement de la ligne de visée est obtenu au moyen de miroirs de visée, au moins un capteur externe est un capteur angulaire mesurant le débattement de ces miroirs à balayage, les mouvements de ces miroirs étant inclus dans le vecteur $\theta_R(n)$, pour $1 \leq n \leq N$ et faisant partie desdits mouvements de l'instrument à estimer.

Suivant encore d'autres exemples, il est possible d'utiliser des données issues des images composées acquises par les barrettes, comme par exemple la position connue dans le repère cartographique $R_C$ d'éléments particuliers et remarquables dans l'image composée, appelés communément amers ou points d'appui dans l'image composée.

Dans la suite de la description, on se place dans le cas non limitatif de mesures du mouvement obtenues par un gyroscope et un capteur stellaire.

Les mesures effectuées par un capteur stellaire sont des mesures absolues qui peuvent par exemple être exprimées sous la forme suivante :

$$y_{ST}(n) = \theta_R(n) + \varepsilon_{ST}(n), \quad 1 \leq n \leq N \qquad (10)$$

où $\varepsilon_{ST}$ désigne un bruit de mesure, qui est généralement un bruit coloré. On désigne par $Y_{ST}$ le vecteur comprenant l'ensemble $\{y_{ST}(n), 1 \leq n \leq N\}$, et par $E_{ST}$ le vecteur comprenant l'ensemble $\{\varepsilon_{ST}(n), 1 \leq n \leq N\}$.

L'expression (10) peut également s'exprimer sous la forme :

$$M_{ST}Y_{ST} = M_{ST} \cdot \Theta_R + M_{ST} \cdot E_{ST} \qquad (11)$$

où $M_{ST}$ est un opérateur de blanchissement du bruit de mesure $E_{ST}$, de sorte que $M_{ST} \cdot E_{ST}$ possède sensiblement les caractéristiques d'un bruit blanc.

Les mesures effectuées par un gyroscope sont des mesures différentielles qui peuvent par exemple être exprimées sous la forme suivante :

$$y_G(n) = \theta_R(n) - \theta_R(n-1) + \varepsilon_G(n), 2 \leq n \leq N \qquad (12)$$

où $\varepsilon_G$ désigne un bruit blanc de mesure. On désigne par $Y_G$ le vecteur comprenant l'ensemble $\{y_G(n), 2 \leq n \leq N\}$, par $E_G$ le vecteur comprenant l'ensemble $\{\varepsilon_G(n), 1 \leq n \leq N\}$.

L'expression (12) peut également s'exprimer sous la forme :

$$Y_G = M_G \cdot \Theta_R + E_G(n) \qquad (13)$$

où $M_G$ est un opérateur de convolution associé au filtre ayant pour réponse impulsionnelle [1, -1].

La fonction $F_2$ de ressemblance externe, dans le cas d'un capteur stellaire et d'un gyroscope, s'exprime de préférence sous la forme suivante :

$$F_2(\Theta) = \exp\left(-h_2\left(M_{ST} \cdot (Y_{ST} - \Theta)\right) - h_3\left(Y_G - M_G \cdot \Theta\right)\right) \qquad (14)$$

où $h_2$ et $h_3$ sont des p-normes.

D'autres formes de la fonction $F_2$ de ressemblance externe sont possibles, et l'on peut introduire par exemple des pondérations fréquentielles rendant compte de la bande passante des différents capteurs externes.

De préférence, la fonction $F_1$ de ressemblance image et la fonction $F_2$ de ressemblance externe sont optimisées conjointement. Par exemple, on optimise une fonction globale F cumulant ladite fonction de ressemblance image et ladite fonction de ressemblance externe.

Rien n'exclut toutefois de mettre en oeuvre d'autres schémas d'optimisation qu'une optimisation conjointe des fonctions $F_1$ de ressemblance image et $F_2$ de ressemblance externe. Suivant un autre exemple, on détermine l'hypothèse de mouvement $\Theta$ qui optimise la fonction $F_1$, puis à partir de cette hypothèse de mouvement, on optimise la fonction $F_2$. Cette optimisation alternée des fonctions $F_1$ et $F_2$ peut en outre être itérée plusieurs fois. Suivant encore un autre exemple, au cours d'un processus itératif d'optimisation, par exemple par la méthode du gradient, on considère une fonction $F_1$ ou $F_2$ différente d'une itération à l'autre, c'est à dire en alternant d'une itération à l'autre la fonction $F_1$ ou $F_2$ dont on calcule le gradient.

Une fonction globale F, pour une optimisation conjointe, prend avantageusement la forme d'une somme, éventuellement pondérée, des fonctions $F_1$ et $F_2$. Suivant d'autres exemples, la fonction globale F pourra prendre la forme d'un produit des fonctions $F_1$ et $F_2$. On note que, en prenant l'opposé d'un logarithme d'un produit de fonctions $F_1$ et $F_2$, on obtient de manière équivalente pour l'invention une fonction globale sous la forme d'une somme des logarithmes des fonctions $F_1$ et $F_2$.

Des exemples de fonctions globales F cumulant les fonctions $F_1$ et $F_2$ peuvent s'exprimer comme suit :

$$F(\Theta) = \exp\left(-\sum_{i<j}\sum_{p=(i,j)}\alpha_{ij}\cdot h_1(B_1(W_1(p,\Theta))-B_2(W_2(p,\Theta)))\right)\times$$
$$\exp(-h_2(M_{ST}\cdot(Y_{ST}-\Theta))-h_3(Y_G-M_G\cdot\Theta)) \qquad (15a)$$

$$F(\Theta) = \sum_{i<j}\sum_{p=(i,j)}\alpha_{ij}\cdot h_1(B_1(W_1(p,\Theta))-B_2(W_2(p,\Theta)))+$$
$$h_2(M_{ST}\cdot(Y_{ST}-\Theta))+h_3(Y_G-M_G\cdot\Theta) \qquad (15b)$$

Si, par exemple, les distances $h_1$, $h_2$ et $h_3$ sont toutes trois sous la forme du carré d'une norme euclidienne, désignée par $\|\cdot\|^2$, le mouvement estimé $\Theta_{EST}$ peut être déterminé comme suit :

$$\Theta_{EST} =$$
$$\underset{\Theta}{\arg\min}\left(\sum_{i<j}\sum_{p=(i,j)}\alpha_{ij}\cdot\left\|B_1(W_1(p,\Theta))-B_2(W_2(p,\Theta))\right\|^2 + \left\|M_{ST}\cdot(Y_{ST}-\Theta)\right\|^2 + \left\|Y_G-M_G\cdot\Theta\right\|^2\right)$$
$$(16)$$

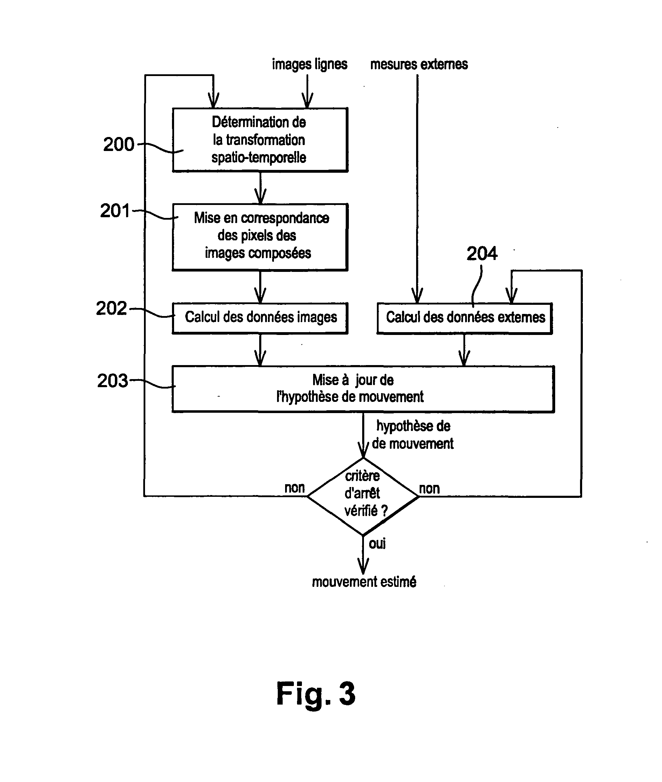

La figure 3 représente un exemple de mise en oeuvre dans lequel le mouvement estimé $\Theta_{EST}$ est déterminé itérativement en tenant compte des mesures effectuées par les capteurs externes et en optimisant à la fois la fonction $F_1$ de ressemblance image et la fonction $F_2$ de ressemblance externe.

Cet exemple comporte, outre les étapes déjà décrites en référence à la figure 2, une étape 204 de calcul de données, dites « données externes », en fonction des mesures externes réalisées par les capteurs externes. Au cours de l'étape 203 de mise à jour de l'hypothèse de mouvement, l'hypothèse de mouvement $\Theta^{k+1}$ pour l'itération suivante (k+1) est déterminée en fonction des données image et desdites données externes.

Au cours de l'étape 204 de calcul des données externes, on détermine par exemple la valeur de la fonction $F_2$ de ressemblance externe d'après l'hypothèse de mouvement $\Theta^k$ de l'itération k en cours et d'après les mesures effectuées par les capteurs externes.

De préférence, on détermine, au cours de l'étape 204 de calcul des données externes, un ou plusieurs gradients de la fonction $F_2$ de ressemblance externe, afin d'avoir une information sur la direction dans laquelle faire évoluer l'hypothèse de mouvement $\Theta^k$ de l'itération k en cours pour optimiser la fonction $F_2$ de ressemblance externe.

Au cours de l'étape 203 de mise à jour du mouvement estimé, on prend en compte les données images et les données externes, soit cumulativement (en tenant compte de l'ensemble des données images et externes à chaque itération k), soit en alternance (en tenant compte alternativement des données image à l'étape k du procédé, et des données externe à l'étape k+1). L'hypothèse de mouvement $\Theta^{k+1}$ pour l'itération (k+1) est par exemple déterminée en fonction de l'hypothèse de mouvement $\Theta^k$, à laquelle on ajoute un terme de mise à jour $\Delta\Theta^k$ qui est déterminé d'après les données images et les données externes.

De préférence, dans un mode cumulatif, le terme de mise à jour $\Delta\Theta^k$ est une somme pondérée des gradients calculés au cours de étapes 202 et 204, lesdits gradients étant pondérés par exemple par les valeurs des fonctions respectivement $F_1$ de ressemblance image et $F_2$ de ressemblance externe.

Dans un mode alterné, le terme de mise à jour sera alternativement le terme de gradient correspondant à la fonction $F_1$ de ressemblance image, et le terme de gradient correspondant à la fonction $F_2$ de ressemblance externe.

Prise en compte d'un modèle de mouvement

Dans un mode particulier de mise en oeuvre, compatible avec l'un quelconque des modes de mise en oeuvre précédemment décrits, le mouvement de l'instrument d'observation 10 est supposé suivre un modèle, dit « modèle de mouvement ».

Le mouvement de l'instrument d'observation 10 est continu au cours du temps, de type généralement vibratoire, de sorte que les mouvements $\theta(n)$ sont corrélés d'un instant d'acquisition à l'autre.

L'utilisation d'un modèle de mouvement permet de contraindre la recherche du mouvement estimé, de sorte que le nombre d'inconnues à déterminer est généralement inférieur au nombre total des paramètres $\theta(n)$, $1 \leq n \leq N$, à estimer en l'absence de modèle de mouvement, égal à 3N (roulis, tangage, lacet).

Un autre intérêt consiste à permettre ainsi de contraindre le contenu fréquentiel du mouvement estimé, notamment si l'on cherche à estimer plus particulièrement les mouvements parasites, dont on a vu que leur spectre était généralement principalement compris entre quelques dizaines de Hertz et quelques centaines de Hertz.

Suivant un premier exemple, le modèle de mouvement est paramétrique, c'est-à-dire qu'il est décrit par un ensemble limité de paramètres.

De préférence, le modèle de mouvement paramétrique utilise des combinaisons linéaires de fonctions de base, pouvant être de type polynômes, ondelettes, sinusoïdes, splines, etc. Un tel modèle de mouvement s'exprime par exemple, pour les angles de roulis $\varphi(n)$ sous la forme suivante :

$$\varphi(n) = \sum_{m=0}^{M-1} \lambda_m \cdot \mu_m(n) \cdot \omega_m(n), \ 1 \leq n \leq N \qquad (17)$$

expression dans laquelle les paramètres du modèle de mouvement paramétrique sont les suivants :

- M est l'ordre du modèle de mouvement paramétrique,
- $\omega_m(n)$, $0 \leq m \leq M-1$, sont les fonctions de base,
- $\mu_m(n)$, $0 \leq m \leq M-1$, sont des coefficients adaptant localement le modèle de mouvement au cours des instants d'acquisition,
- $\lambda_m$ sont des coefficients scalaires.

Les modèles de mouvement pour les angles de tangage $\alpha(n)$ et de lacet $\psi(n)$ suivent le même format que celui donné à l'expression (17), les paramètres étant éventuellement différents.

Suivant un autre exemple, le modèle de mouvement est probabiliste. De préférence, il s'agit d'un modèle de mouvement autorégressif, s'exprimant par exemple, sous la forme suivante :

$$\theta(n) = \sum_{l=1}^{L} a_l \cdot \theta(n-l) + e(n), \ 1 \leq n \leq N \qquad (18)$$

expression dans laquelle les paramètres du modèle de mouvement autorégressif sont les suivants :

- L est l'ordre du modèle de mouvement autorégressif,
- $a_l$, $1 \leq l \leq L$, sont les coefficients du modèle de mouvement autorégressif,
- $e(n)$ est la réalisation d'un vecteur de bruits blancs gaussiens de même dimension que $\theta(n)$.

La prise en compte du modèle de mouvement dans le procédé d'estimation peut s'effectuer suivant différentes méthodes.

Suivant un premier exemple de mise en oeuvre, on remplace dans la transformation spatio-temporelle $W_i(p, \ominus)$, l'ensemble des paramètres $\theta(n)$ (angles de roulis $\varphi(n)$, de tangage $\alpha(n)$ et de lacet $\psi(n)$) par leur modèle paramétrique de mouvement du type donné dans l'expression (17). Le mouvement estimé est alors déterminé directement non pas en calculant l'ensemble des valeurs angulaires $\theta(n)$, mais en calculant les paramètres $\lambda_m$ du modèle de mouvement qui optimisent la fonction $F_1$ de ressemblance image et, le cas échéant, la fonction $F_2$ de ressemblance externe.

Dans une solution alternative, le mouvement estimé est déterminé par optimisation d'une fonction, dite « fonction $F_3$ de ressemblance modèle ». La fonction $F_3$ de ressemblance modèle associe, à une hypothèse de mouvement donnée, une ressemblance entre ladite hypothèse de mouvement donnée et le modèle de mouvement.

Dans le cas d'un modèle de mouvement paramétrique du type donné à l'expression (17), la fonction $F_3$ de ressemblance modèle pour le roulis $\varphi(n)$ s'exprime par exemple sous la forme :

$$F_3(\varphi) = \exp\left(-\sum_n h_4\left(\varphi(n) - \sum_{m=0}^{M-1} \lambda_m \cdot \mu_m(n) \cdot \omega_m(n)\right)\right) \qquad (19)$$

où $h_4$ est une p-norme. Les composantes identiques liées aux autres angles de tangage et de lacet sont cumulées par multiplication dans ce cas.

Dans le cas d'un modèle de mouvement probabiliste du type donné à l'expression (18), la fonction $F_3$ de ressemblance modèle s'écrira par exemple :

$$F_3(\Theta) = \exp\left(-\sum_n h_4\left(\theta(n) - \sum_{l=0}^{L-1} a_l \cdot \theta(n-l)\right)\right) \qquad (20)$$

où $h_4$ est une p-norme.

L'optimisation de la fonction $F_3$ de ressemblance modèle peut se faire conjointement avec l'optimisation de la fonction $F_1$ de ressemblance image, au moyen d'une fonction globale F cumulant ladite fonction de ressemblance image et ladite fonction de ressemblance modèle. De préférence, la fonction globale F cumule également la fonction $F_2$ de ressemblance externe, et l'optimisation s'effectue conjointement pour les trois fonctions $F_1$, $F_2$ et $F_3$.

Suivant un autre exemple, on calcule l'hypothèse de mouvement $\ominus$ optimisant la fonction $F_1$ de ressemblance image, ou une fonction globale F cumulant la fonction $F_1$ de ressemblance image et la fonction $F_2$ de ressemblance externe, ou une fonction globale F cumulant les trois fonctions $F_1$, $F_2$ et $F_3$ (les paramètres du modèle étant fixés), puis, étant donnée cette hypothèse de mouvement, on calcule les paramètres du modèle (paramétrique ou probabiliste) optimisant la fonction $F_3$ de ressemblance modèle pour cette hypothèse de mouvement. On peut itérer plusieurs fois cette optimisation alternée.

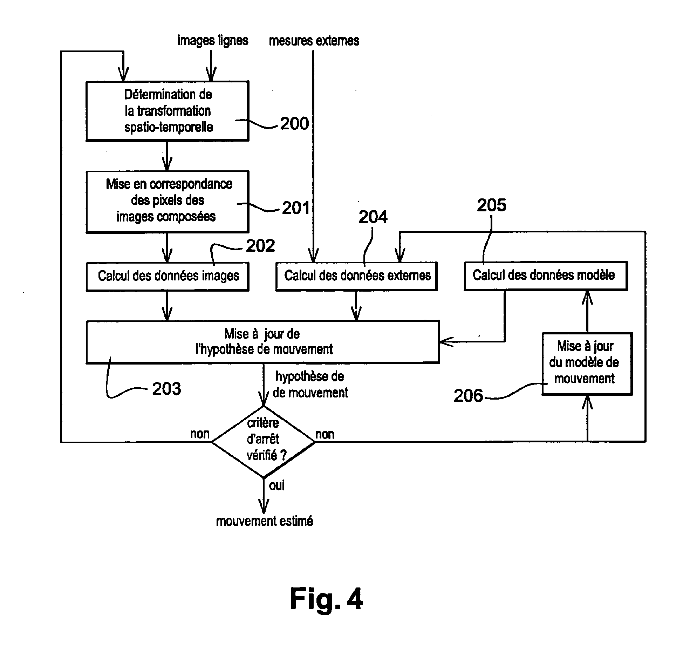

La figure 4 représente un mode particulier de mise en oeuvre du procédé dans lequel le mouvement estimé $\ominus_{EST}$ est déterminé itérativement en tenant compte des images composées, des mesures effectuées par les capteurs externes et d'un modèle de mouvement probabiliste.

Outre les étapes décrites précédemment en référence à la figure 3, le procédé d'estimation comporte également les étapes :

- 205 de calcul de données, dites « données modèle », en fonction du modèle temporel de mouvement et de l'hypothèse de mouvement $\ominus^k$ de l'itération k en cours,
- 203 mise à jour de l'hypothèse de mouvement pour l'itération suivante, en fonction des données modèle.

Au cours de l'étape 205, on calcule des données modèle qui correspondent par exemple à la valeur de la fonction $F_3$ de ressemblance modèle. De préférence, on détermine, au cours de l'étape 205 de calcul des données modèle, un ou plusieurs gradients de la fonction $F_3$ de ressemblance modèle, afin d'avoir une information sur la direction dans laquelle faire évoluer l'hypothèse de mouvement $\ominus^k$ de l'itération k en cours pour optimiser la fonction $F_3$ de ressemblance modèle.

Les données modèle sont préférentiellement utilisées au cours de l'étape 203 de mise à jour de l'hypothèse de mouvement, tel que décrit précédemment pour la prise en compte des données externes.

De préférence, le procédé comporte une 206 de mise à jour du modèle de mouvement en fonction de l'hypothèse de mouvement $\ominus^{k+1}$ pour l'itération (k+1) suivante. Au cours de cette étape 206, on met à jour le modèle de mouvement en fonction de l'hypothèse de mouvement $\ominus^{k+1}$ de l'itération (k+1). Cette mise à jour est une estimation d'un nouveau modèle de mouvement, par exemple une estimation au sens du maximum de vraisemblance, des moindres carrés, maximum a posteriori, etc.

Masquage de pixels mis en correspondance

Dans un mode particulier de mise en oeuvre du procédé, compatible avec l'un quelconque des modes précédemment décrits, on met en oeuvre un masquage des pixels mis en correspondance dont la ressemblance évolue, au cours de l'optimisation, de façon anormale par rapport à la ressemblance des autres pixels mis en correspondance.

Par « masquage », on entend que les contributions desdits pixels dont la ressemblance évolue de façon anormale sont réduites, dans la fonction $F_1$ de ressemblance image, par rapport aux contributions des autres pixels.

Les pixels mis en correspondance dont la ressemblance image évolue de façon anormale sont par exemple des pixels mis en correspondance dont les valeurs sont significativement différentes, en particulier dont les différences sont significativement plus importantes que celles statistiquement constatées, en moyenne, sur l'ensemble des pixels. En d'autres termes, les pixels mis en correspondance dont la ressemblance évolue de façon anormale correspondent à des mesures qui apparaissent comme aberrantes, compte tenu des mesures disponibles.

De telles mesures aberrantes sont généralement liées à la présence de nuages, à des effets de parallaxe dus aux incertitudes sur le relief du fait que les lignes de visée des barrettes sont différentes, aux différences de domaines de longueurs d'ondes d'acquisition, à la prise en compte incorrecte du relief, etc.

Le masquage des pixels mis en correspondance dont la ressemblance image évolue de façon anormale est par exemple effectué en considérant pour la fonction $F_1$ de ressemblance image une fonction $h_1$ d'estimation robuste. De telles fonctions d'estimation robuste, par exemple un M-estimateur, sont connues de l'homme de l'art.

Suivant un autre exemple non limitatif, on détermine une matrice de pondération $M_P$ des pixels des images composées. La matrice de pondération est préférentiellement de même dimension que les images composées. Certains éléments de la matrice de pondération peuvent être de valeur nulle (par exemple sur des zones hors recouvrement des images composées). Elle est par exemple mise en oeuvre comme suit :

$$F_1(\Theta) = \exp\left(-\sum_{i<j}\sum_{p}h_1\big(M_P(p)\cdot\big(B_i(W_i(p,\Theta))-B_j(W_j(p,\Theta))\big)\big)\right) \qquad (21)$$

où $M_P(p)$ est le coefficient de pondération associé au point p.

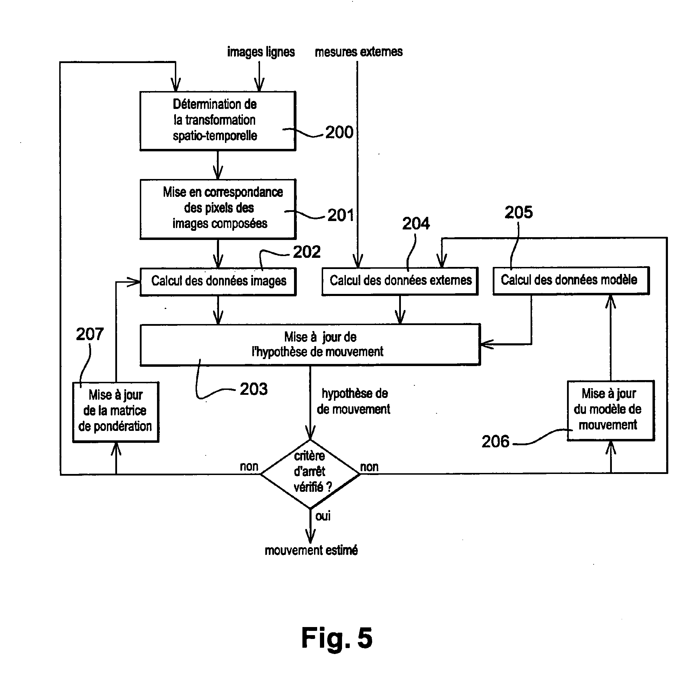

La figure 5 représente un mode particulier de mise en oeuvre du masquage par matrice de pondération, dans le cas où le mouvement estimé est déterminé itérativement, en tenant compte des images composées, des mesures effectuées par les capteurs externes et d'un modèle de mouvement probabiliste.

Outre les étapes décrites en référence à la figure 4, le procédé d'estimation comporte également une étape 207 de mise à jour de la matrice de pondération $M^k_P$ pour l'itération k en cours, en fonction de l'hypothèse de mouvement $\Theta^{k+1}$, étape 207 au cours de laquelle on détermine la matrice de pondération $M^{k+1}_P$ pour l'itération (k+1) suivante.

De préférence, les éléments de la matrice de pondération $M^{k+1}_P$ sont calculés d'après les différences entre la valeur des pixels mis en correspondance d'après l'hypothèse de mouvement $\Theta^{k+1}$, c'est-à-dire d'après les différences $B_1(W_1(p,\Theta^{k+1}))$-$B_2(W_2(p,\Theta^{k+1}))$.

Pour définir les coefficients de pondération, on peut par exemple calculer la répartition des différences de pixels mis en correspondance par intervalles de valeur, en déterminant pour chaque intervalle le nombre de couples de pixels dont la différence est dans cet intervalle, puis les pondérations de la matrice $M^{k+1}_P$ sont déterminées pour chaque pixel comme étant le rapport entre le nombre d'occurrences correspondant à l'intervalle dans lequel se situe le pixel et le nombre total de pixels dans les images.

Il est à noter qu'on peut utiliser la même matrice de pondération pour toutes les paires d'images composées, ou déterminer une matrice de pondération pour chaque paire, en fonction des images composées de la paire.

Schéma d'optimisation multi-résolution

Dans encore un mode particulier de mise en oeuvre du procédé d'estimation, compatible avec l'un quelconque des modes précédemment décrits, ledit procédé d'estimation est itéré selon un schéma d'optimisation multi-résolution.

En d'autres termes, lors d'une première itération du procédé d'estimation, on considère un premier sous-ensemble de pixels des images composées, et on détermine un premier mouvement estimé pour ce premier sous-ensemble.

On considère dans une seconde itération du procédé un second sous-ensemble des pixels des images composées recalées avec le premier mouvement estimé, comportant davantage de pixels que le premier sous-ensemble, et on détermine un second mouvement estimé.

On itère le procédé d'estimation en augmentant progressivement le nombre de pixels du sous-ensemble considéré, jusqu'à atteindre le sous-ensemble final, pouvant correspondre à l'intégralité des pixels des images composées, du moins dans la zone de recouvrement.

En itérant le procédé d'estimation selon un schéma d'optimisation multi-résolution, on s'attend à améliorer la précision du mouvement estimé, et/ou à accélérer la convergence du procédé d'estimation vers un mouvement estimé qui satisfasse le critère d'arrêt.

C) Remarques complémentaires, généralisations

De manière plus générale, la portée de la présente invention ne se limite pas aux modes de mise en oeuvre décrits ci-dessus à titre d'exemples non limitatifs, mais s'étend au contraire à toutes les modifications à la portée de l'homme de l'art.

Notamment, la détermination du mouvement estimé $\Theta_{EST}$ par optimisation de la fonction $F_1$ de ressemblance image et, le cas échéant, de la fonction $F_2$ de ressemblance externe et/ou de la fonction $F_3$ de ressemblance modèle, peut mettre en oeuvre tout procédé d'optimisation connu de l'homme de l'art.

Le procédé peut s'appliquer à toute forme de barrettes, éventuellement autre que linéaire, par exemple linéaire discontinue, en V, ou tout autre forme géométrique, du moment qu'il existe un recouvrement entre les images composées d'au moins deux barrettes durant une prise de vue, et qu'il est possible d'exprimer un modèle géométrique de l'instrument d'observation 10 dans le repère instrument $R_{INSTR}$.

Il est à noter que les cellules sensibles des barrettes $b_1$ à $b_{Nb}$ peuvent être agencées sur plusieurs lignes, le nombre de cellules sensibles par ligne étant cependant supérieur d'au moins un facteur dix au nombre de lignes. On comprend donc que les images lignes acquises par les différentes barrettes sont dans ce cas également constituées d'une pluralité de lignes de pixels. La présente invention n'en est pas modifiée, dans la mesure où les images composées sont formées à partir d'images lignes acquises à des instants différents, lesdites images lignes représentant des portions différentes de la scène observée à la surface de la Terre.

En outre, rien n'exclut que les barrettes soient des lignes de cellules sensibles d'un même capteur se présentant sous la forme d'une matrice bidimensionnelle de cellules sensibles, à partir du moment où elles réalisent l'acquisition d'un même point de la scène observée à des instants différents. Rien n'exclut non plus de considérer des barrettes agencées non pas au plan focal d'un même instrument, mais au plan focal d'au moins deux instruments différents, dont les lignes de visée sont proches. On note que tout ce qui a été décrit reste valable si on désigne par « instrument », l'ensemble des au moins deux instruments, et par « ligne de visée de l'instrument », une ligne de visée éventuellement fictive par rapport à laquelle se déduisent les lignes de visée des au moins deux instruments à partir d'un modèle géométrique de l'ensemble des instruments.

On note également que l'utilisation de toutes les images composées, et en particulier de toutes les paires possibles d'images composées, dans la fonction $F_1$ de ressemblance image, constitue un mode préféré de mise en oeuvre nullement limitatif de l'invention.

Suivant un autre exemple, on utilise uniquement les images lignes acquises par les barrettes $b_1$ et $b_{Nb}$, c'est-à-dire les plus espacées dans le plan focal de l'instrument d'observation 10. S'il existe des instants d'acquisition pour lesquels on ne dispose pas d'image ligne acquise par l'une ou les deux barrettes $b_1$ et $b_{Nb}$, le mouvement estimé est par exemple interpolé pour lesdits instants d'acquisition, ou contraint par le modèle temporel de mouvement, qu'il soit paramétrique ou probabiliste.

Suivant encore un autre exemple, on utilise toutes les images composées, mais on ne considère qu'un sous-ensemble de toutes les paires possibles d'images composées, de préférence un sous-ensemble dans lequel chaque image composée est utilisée au moins une fois.

En plus des mouvements en rotation de l'instrument, on peut introduire les mouvements en translation de l'instrument d'observation 10 dans le mouvement à estimer. Il suffit d'augmenter le vecteur $\ominus$ d'hypothèse de mouvements de rotation de l'instrument en un vecteur $(X,\ominus)$ où X représente l'hypothèse de mouvement de translation au cours du temps, et exprimer les transformations spatio-temporelle et les fonctions de ressemblance $F_1$, $F_2$ et $F_3$ en fonction de $(X,\ominus)$, puis à calculer l'hypothèse de mouvement $(X,\ominus)$ maximisant les fonctions de ressemblance.

Dans le cas où l'on introduit les mouvements en translation parmi les variables à estimer, il est avantageux de considérer des mesures externes données par un capteur externe tel qu'un récepteur de navigation par satellites, une centrale inertielle, ou tout autre capteur permettant de fournir une estimation de la position du véhicule dans le référentiel terrestre $R_T$, et de traiter ces mesures externes dans la fonction $F_2$ de ressemblance externe comme décrit pour les mouvements en rotation.

**Revendications**

1. Procédé d'estimation du mouvement d'un instrument d'observation (10) embarqué dans un véhicule survolant un corps céleste, l'instrument d'observation (10) comportant au moins deux barrettes $(b_1,b_2)$ dont les lignes de visée sont différentes, chaque barrette comportant des cellules sensibles et réalisant l'acquisition successive, par défilement de sa ligne de visée sur le corps céleste, d'images lignes formant une image composée, des parties des images composées représentant sensiblement une même scène du corps céleste, **caractérisé en ce que** le mouvement estimé est déterminé par optimisation d'une fonction globale cumulant :

   - une fonction de ressemblance image associant, à une hypothèse de mouvement donnée, une ressemblance entre des valeurs de pixels mis en correspondance d'au moins une paire d'images composées, des pixels mis en correspondance étant des pixels représentant théoriquement le même point de la scène observée compte tenu de l'hypothèse de mouvement considérée,
   - une fonction de ressemblance externe associant, à ladite hypothèse de mouvement considérée, une ressemblance entre ladite hypothèse de mouvement et des mesures, représentatives de mouvements de l'instrument d'observation, effectuées par un ou des capteurs différents des barrettes de l'instrument d'observation, le procédé comportant, pour chaque hypothèse de mouvement considérée au cours de l'optimisation de la fonction globale, les étapes :

- (200) de détermination, en fonction de l'hypothèse de mouvement considérée et d'un modèle géométrique des directions de visée des cellules sensibles des barrettes de l'instrument d'observation (10), d'au moins une transformation de mise en correspondance des pixels de l'au moins une paire d'images composées, dite « transformation spatio-temporelle »,

- (201) de mise en correspondance des pixels de l'au moins une paire d'images composées au moyen de l'au moins une transformation spatio-temporelle.

2. Procédé selon la revendication 1, dans lequel la fonction globale est optimisée itérativement, par itération des étapes suivantes jusqu'à ce qu'un critère d'arrêt soit vérifié :

- (200) détermination de l'au moins une transformation spatio-temporelle de l'au moins une paire d'images composées d'après l'hypothèse de mouvement de l'itération en cours,
- (201) mise en correspondance des pixels de l'au moins une paire d'images composées,
- (202) calcul, pour la fonction de ressemblance image, de données images en fonction desdits pixels mis en correspondance, lesdites données image comprenant au moins un gradient de la fonction de ressemblance image, représentatif de la variation, au voisinage de l'hypothèse de mouvement de l'itération en cours, de la ressemblance entre les valeurs des pixels mis en correspondance de l'au moins une paire d'images composées,
- (203) mise à jour de l'hypothèse de mouvement pour l'itération suivante en fonction des données images.

3. Procédé selon l'une des revendications précédentes, dans lequel la fonction globale est optimisée itérativement, par itération des étapes suivantes jusqu'à ce qu'un critère d'arrêt soit vérifié :

- (204) calcul, pour la fonction de ressemblance externe, de données externes en fonction des mesures du ou des capteurs et de l'hypothèse de mouvement de l'itération en cours, lesdites données externes comprennant au moins un gradient de la fonction de ressemblance externe, représentatif de la variation, au voisinage de cette hypothèse de mouvement, de la ressemblance entre l'hypothèse de mouvement de l'itération en cours et les mesures du ou des capteurs,
- (203) mise à jour de l'hypothèse de mouvement pour l'itération suivante en fonction des données externes.

4. Procédé selon l'une des revendications précédentes, dans lequel au moins un capteur est un gyroscope ou un capteur stellaire ou un capteur angulaire d'un miroir orientable de l'instrument d'observation (10).

5. Procédé selon l'une des revendications précédentes, dans lequel on détermine le mouvement estimé en fonction d'un modèle temporel prédéfini du mouvement de l'instrument d'observation (10).

6. Procédé selon la revendication 5, dans lequel le mouvement estimé est déterminé par optimisation d'une fonction de ressemblance modèle associant, à une hypothèse de mouvement donnée, une ressemblance entre ladite hypothèse de mouvement et le modèle temporel de mouvement.

7. Procédé selon la revendication 6, comportant une étape (206) de mise à jour du modèle temporel de mouvement en fonction d'une hypothèse de mouvement.

8. Procédé selon l'une des revendications 6 à 7, dans lequel la fonction de ressemblance modèle est optimisée itérativement, par itération des étapes suivantes jusqu'à ce qu'un critère d'arrêt soit vérifié :

- (205) calcul, pour la fonction de ressemblance modèle, de données modèle en fonction du modèle temporel de mouvement et de l'hypothèse de mouvement de l'itération en cours, lesdites données modèle comprennant au moins un gradient de la fonction de ressemblance modèle, représentatif de la variation, au voisinage de cette hypothèse de mouvement, de la ressemblance entre l'hypothèse de mouvement de l'itération en cours et le modèle temporel de mouvement,
- (203) mise à jour de l'hypothèse de mouvement pour l'itération suivante en fonction des données modèle.

9. Procédé selon l'une des revendications 6 à 8, dans lequel la fonction de ressemblance image, la fonction de ressemblance externe et la fonction de ressemblance modèle sont optimisées conjointement, la fonction globale cumulant ladite fonction de ressemblance image, ladite fonction de ressemblance externe et ladite fonction de ressemblance modèle.

10. Procédé selon l'une des revendications 5 à 9, dans lequel le modèle temporel de mouvement est un modèle de mouvement paramétrique.

11. Procédé selon la revendication 10, dans lequel le modèle de mouvement paramétrique est un modèle dont les fonctions de base sont du type polynômes, ou ondelettes, ou sinusoïdes, ou splines.

12. Procédé selon l'une des revendications 5 à 9, dans lequel le modèle temporel de mouvement est un modèle de mouvement probabiliste.

13. Procédé selon la revendication 12, dans lequel le modèle de mouvement probabiliste est un modèle de type autorégressif.

**Patentansprüche**

1. Verfahren zum Abschätzen der Bewegung eines Beobachtungsgeräts (10), das in einem Fahrzeug verbaut ist, das einen Himmelskörper überfliegt, wobei das Beobachtungsgerät (10) zumindest zwei Leisten ($b_1$, $b_2$) mit unterschiedlichen Visierlinien umfasst, und jede Leiste sensible Zellen enthält, und durch die Verschiebung der Visierlinie auf dem Himmelskörper die sukzessive Erfassung von Zeilenbildern durchführt, die gemeinsam ein zusammengesetztes Bild ergeben, wobei die Abschnitte der zusammengesetzten Bilder in etwa eine selbe Szene des Himmelskörpers darstellen, **dadurch gekennzeichnet, dass** die abgeschätzte Bewegung durch die Optimierung einer globalen Funktion bestimmt wird, in der folgendes kumuliert wird:

   - eine Bildähnlichkeitsfunktion, die einer gegebenen Bewegungsannahme eine Ähnlichkeit zwischen den Werten von Bildpunkten zuordnet, die aus zumindest einem Paar an zusammengesetzten Bildern abgeglichen werden, und die abgeglichenen Bildpunkte jene Bildpunkte sind, die angesichts der betrachteten Bewegungsannahme theoretisch denselben Punkt der beobachteten Szene darstellen,
   - eine externe Ähnlichkeitsfunktion, die der besagten betrachteten Bewegungsannahme eine Ähnlichkeit zwischen der besagten Bewegungsannahme und Messungen zuordnet, die repräsentativ für die Bewegungen des Beobachtungsgeräts sind, und die durch einen oder durch verschiedene Sensoren der Leisten des Beobachtungsgeräts durchgeführt werden,
   wobei das Verfahren für jede im Laufe der Optimierung der globalen Funktion betrachtete Bewegungsannahme die folgenden Schritte umfasst:
   - (200) die Bestimmung zumindest einer Abgleichstransformation der Bildpunkte des zumindest einen Paares an zusammengesetzten Bildern, genannt "Raum-Zeit-Transformation", in Abhängigkeit von der betrachteten Bewegungsannahme und eines geometrischen Modells der Visierrichtungen der sensiblen Zellen der Leisten des Beobachtungsgeräts (10),
   - (201) den Abgleich der Bildpunkte zumindest eines Paares an zusammengesetzten Bildern anhand zumindest einer Raum-Zeit-Transformation.

2. Verfahren nach Anspruch 1, bei dem die globale Funktion wiederholt durch die Iteration der folgenden Schritte optimiert wird, bis ein Stoppkriterium überprüft wird:

   - (200) die Bestimmung zumindest einer Raum-Zeit-Transformation zumindest eines Paares an zusammengesetzten Bildern gemäß der Bewegungsannahme der laufenden Iteration,
   - (201) der Abgleich der Bildpunkte zumindest eines Paares an zusammengesetzten Bildern,
   - (202) die Berechnung von Bilddaten für die Bildähnlichkeitsfunktion in Abhängigkeit von den besagten abgeglichenen Bildpunkten, wobei die besagten Bilddaten zumindest einen Gradienten der Bildähnlichkeitsfunktion im Umfeld der Bewegungsannahme der laufenden Iteration umfassen, der repräsentativ für die Variation der Ähnlichkeit zwischen den abgeglichenen Bildpunktwerten zumindest eines Paares an zusammengesetzten Bildern ist,
   - (203) die Aktualisierung der Bewegungsannahme für die folgende Iteration in Abhängigkeit von den Bilddaten.

3. Verfahren nach einem der vorherigen Ansprüche, bei dem die globale Funktion wiederholt durch die Iteration der folgenden Schritte optimiert wird, bis ein Stoppkriterium überprüft wird:

   - (204) die Berechnung externer Daten für die externe Ähnlichkeitsfunktion in Abhängigkeit von den Messwerten des oder der Sensoren und von der Bewegungsannahme der laufenden Iteration, wobei die besagten externen Daten zumindest einen Gradienten der externen Ähnlichkeitsfunktion im Umfeld dieser Bewegungsannahme umfassen, der repräsentativ für die Variation der Ähnlichkeit zwischen der Bewegungsannahme der laufenden Iteration und den Messwerten des oder der Sensoren ist,
- (203) die Aktualisierung der Bewegungsannahme für die folgende Iteration in Abhängigkeit von den externen Daten.

4. Verfahren nach einem der vorherigen Ansprüche, bei dem zumindest ein Sensor ein Gyroskop oder ein Sternsensor oder ein Winkelsensor eines beweglichen Spiegels des Beobachtungsgeräts (10) ist.

5. Verfahren nach einem der vorherigen Ansprüche, bei dem man die geschätzte Bewegung in Abhängigkeit von einem vorbestimmten Zeitmodell der Bewegung des Beobachtungsgeräts (10) bestimmt.

6. Verfahren nach Anspruch 5, bei dem die geschätzte Bewegung durch die Optimierung einer Modellähnlichkeitsfunktion bestimmt wird, die einer gegebenen Bewegungsannahme eine Ähnlichkeit zwischen der besagten Bewegungsannahme und dem Zeitmodell der Bewegung zuordnet.

7. Verfahren nach Anspruch 6, das einen Schritt (206) der Aktualisierung des Zeitmodells der Bewegung in Abhängigkeit von einer Bewegungsannahme umfasst.

8. Verfahren nach einem der Ansprüche 6 bis 7, bei dem die Modellähnlichkeitsfunktion durch die Iteration der folgenden Schritte wiederholt optimiert wird, bis ein Stoppkriterium überprüft wird:

- (205) die Berechnung von Modelldaten für die Modellähnlichkeitsfunktion in Abhängigkeit vom Zeitmodell der Bewegung und der Bewegungsannahme der laufenden Iteration, wobei die besagten Modelldaten zumindest einen Gradienten der Modellähnlichkeitsfunktion im Umfeld dieser Bewegungsannahme umfassen, der repräsentativ für die Variation der Ähnlichkeit zwischen der Bewegungsannahme der laufenden Iteration und dem Zeitmodell der Bewegung ist,
- (203) die Aktualisierung der Bewegungsannahme für die folgende Iteration in Abhängigkeit von den Modelldaten.

9. Verfahren nach einem der Ansprüche 6 bis 8, bei dem die Bildähnlichkeitsfunktion, die externe Ähnlichkeitsfunktion und die Modellähnlichkeitsfunktion gemeinsam optimiert werden, und die globale Funktion die besagte Bildähnlichkeitsfunktion, die besagte externe Ähnlichkeitsfunktion und die besagte Modellähnlichkeitsfunktion kumuliert.

10. Verfahren nach einem der Ansprüche 5 bis 9, bei dem das Zeitmodell der Bewegung ein parametrisches Bewegungsmodell ist.

11. Verfahren nach Anspruch 10, bei dem das parametrische Bewegungsmodell ein Modell ist, dessen Grundfunktionen polynom, oder wellig oder sinusförmig oder splineförmig sind.

12. Verfahren nach einem der Ansprüche 5 bis 9, bei dem das Zeitmodell der Bewegung ein probabilistisches Bewegungsmodell ist.

13. Verfahren nach Anspruch 12, bei dem das probabilistische Bewegungsmodell ein autoregressives Modell ist.

**Claims**

1. Method for estimating the movement of an observation instrument (10) on-board a vehicle flying over a celestial body, the observation instrument (10) comprising at least two strips ($b_1$, $b_2$) with different lines of sight, each strip comprising sensitive cells and realizing the acquisition of successive image lines making up a composite image, by scanning its line of sight over the celestial body, parts of the composite images representing substantially a same scene of the celestial body, **characterized in that** the estimated movement is determined by optimization of a global function cumulating:

- an image similarity function associating, to a given movement hypothesis, a similarity between values of matched pixels of at least a pair of composite images, matched pixels being pixels that represent, theoretically, the same point of the observed scene, given the considered movement hypothesis, and

- an external similarity function associating, to said considered movement hypothesis, a similarity between said movement hypothesis and measurements, which are representative of the instrument's movements, made by one or several sensors different from the observation instrument's strips,

the method comprising, for each movement hypothesis considered during the optimization of the global function, the following steps:

- (200) determining at least one transformation for matching the pixels of the at least one pair of composite images, referred to as "spatio-temporal transformation", using the considered movement hypothesis and a geometric model of the viewing directions of the sensitive cells of the observation instrument (10);

- (201) matching the pixels of the at least one pair of composite images using the at least one spatio-temporal transformation.

2. Method according to claim 1, wherein the global function is optimized iteratively by iterating the following steps until a stop criterion is satisfied:

- (200) determining the at least one spatio-temporal transformation of the at least one pair of composite images using the movement hypothesis of the current iteration;

- (201) matching the pixels of the at least one pair of composite images;

- (202) computing image data using said matched pixels, for the image similarity function, said image data comprising at least one gradient of the image similarity function that is representative, around the current iteration's movement hypothesis, of the variation of the similarity between the values of the matched pixels of the at least one pair of composite images;

- (203) updating the movement hypothesis for the next iteration using the image data.

3. Method according to one of the preceding claims, wherein the global function is optimized iteratively by iterating the following steps until a stop criterion is satisfied:

- (204) computing, for the external similarity function, external data using the measurements of the sensor or sensors and the current iteration's movement hypothesis, said external data comprising at least one gradient of the external similarity function that is representative, around this movement hypothesis, of the variation of the similarity between the current iteration's movement hypothesis and the measurements of the sensor or sensors;

- (203) updating the movement hypothesis for the next iteration using the external data.

4. Method according to one of the preceding claims, wherein at least one sensor is a gyroscope or a stellar sensor or an angular sensor of a movable mirror of the observation instrument (10).

5. Method according to one of the preceding claims, wherein the estimated movement is determined using a predefined temporal model of the observation instrument's (10) movements.

6. Method according to claim 5, wherein the estimated movement is determined by optimization of a model similarity function that associates, to a given movement hypothesis, a similarity between said movement hypothesis and the temporal movement model.

7. Method according to claim 6, comprising a step (206) of updating the temporal movement model using a movement hypothesis.

8. Method according to one of claims 6 to 7, wherein the model similarity function is optimized iteratively by iterating the following steps until a stop criterion is satisfied:

- (205) computing, for the model similarity function, model data using the temporal movement model and the current iteration's movement hypothesis, said model data comprising at least one gradient of the model similarity function that is representative, around this movement hypothesis, of the variation in similarity between the current iteration's movement hypothesis and the temporal movement model;

- (203) updating the movement hypothesis for the next iteration using the model data.

9. Method according to one of claims 6 to 8, wherein the image similarity function, the external similarity function and the model similarity function are optimized jointly, the global function cumulating said image similarity function, said external similarity function and said model similarity function.

10. Method according to one of claims 5 to 9, wherein the temporal movement model is a parametric movement model.

11. Method according to claim 10, wherein the parametric movement model is a model whose basic functions are of polynomial, wavelet, sinusoid, or spline type.

12. Method according to one of claims 5 to 9, wherein the temporal movement model is a probabilistic movement model.

13. Method according to claim 12, wherein the probabilistic movement model is an autoregressive-type model.

**Fig. 1**

X$_{INSTR}$

M

Y$_{INSTR}$

10

Z$_{INSTR}$

b$_1$

b$_2$

S

images lignes

| Détermination de la transformation spatio-temporelle de mise en correspondance |
200

| Mise en correspondance des pixels des images composées |
201

**Fig. 2**

| Calcul des données images |
202

| Mise à jour de l'hypothèse de mouvement |
203

hypothèse de de mouvement

mouvement estimé ← oui — critère d'arrêt vérifié ? — non

images lignes     mesures externes

200 —     Détermination de
la transformation
spatio-temporelle

201 —     Mise en correspondance
des pixels des
images composées

204

202 —     Calcul des données images     Calcul des données externes

203 —     Mise à jour de
l'hypothèse de mouvement

hypothèse de
de mouvement

non     critère
d'arrêt
vérifié ?     non

oui

mouvement estimé

# Fig. 3

EP 2 502 202 B1

images lignes    mesures externes

Détermination de
la transformation
spatio-temporelle          200

Mise en correspondance
des pixels des
images composées           201

202                                        204        205

Calcul des données images    Calcul des données externes    Calcul des données modèle

Mise à jour de
l'hypothèse de mouvement

203

hypothèse de
de mouvement

Mise à jour
du modèle de
mouvement

206

critère
d'arrêt
vérifié ?

non                non

oui

mouvement estimé

# Fig. 4

26

images lignes    mesures externes

```
                    ↓                ↓
        ┌───────────────────────┐
        │   Détermination de    │
        │   la transformation   │~~200
        │   spatio-temporelle   │
        └───────────────────────┘
                    ↓
        ┌───────────────────────┐
        │  Mise en correspondance│
        │    des pixels des      │~~201
        │   images composées     │
        └───────────────────────┘
                    ↓  ~~202
```

| ┌──────────────────────┐ | ┌──────────────────────┐ | ┌──────────────────────┐ |
| Calcul des données images | Calcul des données externes | Calcul des données modèle |

204    205

207

┌────────────────────────────────────────────┐
│          Mise à  jour de                     │
│       l'hypothèse de mouvement               │
└────────────────────────────────────────────┘

~~203

┌──────────────┐                              ┌──────────────┐
│  Mise à jour │          hypothèse de        │  Mise à jour │
│ de la matrice│          de mouvement        │ du modèle de │
│ de pondération│                             │  mouvement   │
└──────────────┘                              └──────────────┘

206

```
              non ◇ critère ◇ non
                    d'arrêt
                    vérifié ?
                       ↓ oui
                 mouvement estimé
```

# Fig. 5

**EP 2 502 202 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2899344

**Littérature non-brevet citée dans la description**

- **F. MUELLER et al.** Digital photogrammetric assembly line (DPA) point determination using airborne three-line camera imagery - practical results. *Proc. SPIE,* vol. 2357 (592), 592-598
- **CHEN et al.** DEM generation with prism, Alos simulation data. *International Conference on Space Information Technology,* vol. 5985, 1-7
- **SZELISKI RICHARD.** *Image alignment and stitching : a tutorial, http://pages.cs.wisc.edu/~dyer/ai-qual/szeliski-tr06.pdf*
- **YUJI OKOCHI et al.** Extrinsic camera parameter estimation absed on feature estimation and GPS data. *Computer Vision, ACCV 2006 Lecture Notes in Computer Science,* 369-378